# DEMANDE DE BREVET EUROPEEN

(11) **EP 4 317 051 A1**
(43) Date de publication de la demande: **07.02.2024**
(21) Numéro de dépôt: 23189594.7
(22) Date de dépôt: 03.08.2023
(51) Int. Cl.: B67D 7/02, B67D 7/34, G01N 27/06, G05D 7/06

(54) **PROCÉDÉ PRÉDICTIF D'UN RISQUE DE MÉLANGE NUISIBLE DE LIQUIDES**

(30) Priorité: 03.08.2022 FR 2208044
(71) Demandeur: Gaches Chimie, 31750 Escalquens (FR)
(72) Inventeur: MEIFFREN, Vincent, 31200 TOULOUSE (FR)
(74) Mandataire: BARRE LAFORGUE

(57) **Abrégé**

L'invention concerne un procédé d'identification prédictive d'un risque de mélange inapproprié d'un liquide, dit liquide (1) à transférer, dont un transfert dans un contenant (2) de stockage d'un liquide, dit liquide (3) de stock, susceptible d'être contenu dans ledit contenant (2), est envisagé,
procédé dans lequel :
- une mesure de conductivité électrique (σ) dudit liquide (1) à transférer est réalisée sans dilution dudit liquide (1) à transférer,
- la température dudit liquide (1) à transférer dont la conductivité électrique est mesurée, est déterminée,
- la valeur de conductivité électrique mesurée est comparée à des valeurs prédéterminées de conductivité électrique dudit liquide (3) de stock à la température déterminée, et
- il n'est pas procédé au transfert dudit liquide (1) à transférer dans ledit contenant (2) de stockage lorsque la valeur de conductivité électrique mesurée n'appartient pas à un intervalle prédéterminé de valeurs de conductivité électrique dudit liquide de stock à la température déterminée.

## Description

L'invention concerne un procédé d'identification prédictive d'un risque de mélange inapproprié et/ou accidentel et/ou nuisible de deux liquides, préalablement et préventivement à leur mélange. Elle concerne en particulier un tel procédé prédictif d'un risque de survenue d'un mélange inapproprié et nuisible de liquides incompatibles, c'est à dire de liquides dont le mélange est susceptible de procurer des nuisances. Elle concerne en particulier un tel procédé permettant de détecter une incompatibilité entre un liquide, dit liquide de stock, contenu dans un contenant de stockage et un liquide, dit liquide à transférer, dont le transfert dans ce contenant est envisagé. L'invention concerne aussi et en particulier un procédé sécurisé d'approvisionnement d'un contenant de stockage dudit liquide de stock avec ledit liquide à transférer, dans lequel est mis en oeuvre un tel procédé prédictif d'un risque de mélange nuisible de liquides. L'invention peut aussi être utilisée pour sécuriser un transfert d'un liquide vers un contenant mobile qui peut être une citerne routière, un compartiment d'une citerne routière, un emballage ou tout autre contenant mobile.

Il est connu de livrer un liquide « en vrac », c'est-à-dire non conditionné dans un contenant de livraison hermétiquement clos, dans un réservoir de stockage situé sur un site de réception. La livraison d'un liquide « en vrac » dans un tel réservoir de stockage est en général effectuée à partir d'une citerne d'un véhicule de livraison. De tels liquides à livrer peuvent être, de façon non exclusive, des liquides acides ou basiques concentrés et/ou des liquides corrosifs et/ou oxydants. Une telle livraison « en vrac » peut présenter un risque de mélange accidentel, inapproprié et nuisible de ce liquide et d'un deuxième liquide, distinct du liquide livré et susceptible d'être déjà contenu dans le réservoir destiné à recevoir le liquide à livrer. Ce risque peut provenir, par exemple, d'un raccordement erroné de la citerne de livraison et d'un réservoir de stockage d'une pluralité de réservoirs non tous destinés à recevoir le liquide à livrer. Ce risque peut aussi provenir d'une erreur de remplissage de la citerne de livraison préalablement à la livraison.

Un tel mélange inapproprié est dangereux. Il est susceptible de provoquer la formation accidentelle dans l'atmosphère d'un nuage de produits toxiques, voire très toxiques, résultant de ce mélange. Il en est d'autant plus ainsi que les liquides à livrer sont, en général, des solutions concentrées de solutés. À titre d'exemple uniquement, le mélange d'hypochlorite de sodium -notamment d'une solution aqueuse concentrée d'hypochlorite de sodium (eau de javel)- avec une solution concentrée d'un acide fort tel que l'acide sulfurique, ou tel que l'acide chlorhydrique, ou tel que l'acide phosphorique, ou tel que l'acide nitrique ou avec une solution concentrée de chlorure ferrique, provoque un dégagement atmosphérique de dichlore (C*ℓ*₂) gazeux qui, au contact des muqueuses et notamment des poumons forme des acides qui sont agressifs pour ces tissus. La circulation d'un tel nuage dans l'atmosphère est susceptible d'étendre les effets de ce nuage toxique voire très toxique dans un rayon de plusieurs kilomètres autour du point géographique de mélange. Ainsi, les conséquences d'un tel mélange accidentel ont été modélisées et l'étude de ces modèles suggère des conséquences potentiellement catastrophiques à désastreuses.

Au vu de ces conclusions, l'administration met en place des dispositions règlementaires encadrant la livraison de matières susceptibles de provoquer des nuisances. En fonction des volumes de telles matières mis en jeu, l'administration impose la mise en place d'au moins une barrière technique fiable -voire de deux barrières techniques fiables- visant à empêcher l'introduction d'un liquide à livrer dans un réservoir de stockage d'un liquide distinct du liquide à livrer, voire incompatible avec le liquide à livrer, sur des sites hébergeant des Installations Classées pour la Protection de l'Environnement (ICPE).

On connaît des mesures préventives de risques liés à un mélange accidentel de matières incompatibles. Il peut s'agir de mesures administratives ou de mesures technique d'identification des matières dangereuses.

Par exemple, une livraison d'une matière dangereuse sur un site classé *« Seveso »* doit répondre à une procédure selon laquelle :
- la commande d'une quantité d'une matière dangereuse est passée par le site classé « *Seveso* » auprès d'un fournisseur. Cette commande précise la nature de la matière, la concentration et un délai pour la livraison. La validation de cette commande emporte fixation d'une date et d'un horaire pour cette livraison,
- le jour de la livraison, sont contrôlés le numéro de la commande, la conformité de la date et de l'horaire de livraison et la conformité administrative de la matière livrée. Un document retraçant le protocole de sécurité établi dans la langue du conducteur du véhicule de livraison,
- le véhicule de livraison est acheminé sur le site de réception et la capacité de la cuve de réception à recevoir la quantité de matière dangereuse annoncée pour la livraison est vérifiée,
- un échantillon de la matière dangereuse est prélevé et sa densité est analysée en laboratoire. Si la densité est conforme à la densité de la matière attendue, une autorisation de raccordement de la citerne du véhicule de livraison à la cuve de livraison est fournie, sous la forme d'une clé de déverrouillage d'un cadenas verrouillant l'accès au raccordement à la cuve de livraison,
- il est procédé au raccordement de la citerne du véhicule de livraison et de la cuve de réception et au transfert de la matière dangereuse.

L'autorisation de raccordement reste une intervention humaine et peut présenter un risque de défaillance.

L'invention vise à pallier cet inconvénient et à proposer une barrière technique dont la fiabilité est améliorée.

On connaît aussi des méthodes de détection du mélange inapproprié de liquides incompatibles dans un réservoir de stockage, par une mesure de la pression et/ou de la température dans le réservoir permettant de détecter une augmentation de la pression et/ou de la température, indicatrice d'un dégagement gazeux et/ou du déclanchement d'une réaction exothermique dans le réservoir. La détection de cette augmentation de pression et/ou de température interrompt la livraison. Cela étant, une telle détection est une détection *a posteriori,* le mélange inapproprié de liquides incompatibles ayant d'ores et déjà produit des effets nuisibles, comprenant, le cas échéant, un dégagement de gaz toxique dans l'atmosphère. En outre, une telle surpression ou une telle surchauffe est de nature à pouvoir endommager le réservoir et nécessiter son remplacement. Une telle méthode nécessite l'installation et la maintenance d'un capteur de pression et/ou de température dans chaque réservoir dans lequel une livraison de matière dangereuse est envisagée. Elle est donc coûteuse à l'installation et pour en assurer la maintenance.

Par ailleurs, le document WO2015/179413 qui s'inscrit dans le domaine du transfert de liquides agroalimentaires tels que le lait, décrit l'utilisation de mesures de conductivité électrique pour détecter la présence d'impuretés dans le liquide alors qu'il est en cours de transfert entre deux réservoirs. Selon ce document, lorsqu'une variation importante de la conductivité est détectée, le transfert de liquide est arrêté. Néanmoins, ce document ne permet pas de déterminer si un liquide à transférer vers une cuve est compatible ou incompatible avec le liquide de stock qui est contenu par cette cuve.

Un autre document US2010/247383 décrit quant à lui un procédé d'analyse sanguine, dans lequel, le sang est dilué à une concentration déterminée, la conductivité électrique est décrite comme une méthode de vérification de la concentration du liquide. Toutefois, ce document utilise la loi de Kohlrausch qui établit que dans des solutions diluées une règle de proportionnalité est applicable pour déterminer la conductivité attendue du liquide dilué à une concentration définie. La température est ensuite mesurée et la conductivité électrique mesurée est corrigée pour être ramenée à une conductivité théorique pour une température de 25°C, à nouveau ce document utilise une règle de proportionnalité qui établit que la conductivité électrique augmente de 2% par degré de température supplémentaire. La loi de Kohlrausch tout comme la correction de la température négligent les interactions ioniques de la solution car l'environnement est très dilué, or les liquides chimiques minéraux, à titre d'exemple et sans être exhaustif les acides, les bases ou les oxydants sont la plupart du temps concentrés. De plus, mesurer la concentration d'un liquide au travers de la conductivité électrique ne permet pas de déterminer si un liquide à transférer vers une cuve est compatible ou incompatible avec le liquide qui se trouve dans cette cuve.

L'invention vise à pallier ces inconvénients.

On connaît aussi des livraisons lors desquelles le pH du liquide à livrer est mesuré en amont d'une vanne contrôlant son introduction dans un réservoir de stockage du liquide à livrer. Dès lors que la valeur de pH mesuré ne correspond pas à la valeur du pH de la solution aqueuse attendue, la vanne est maintenue en position fermée. Un tel capteur de pH présente cependant une durée de vie limitée, notamment lorsque la matière dangereuse dont le pH est mesuré est un acide fort et concentré. En outre, un tel capteur de pH ne permet pas de distinguer différentes solutions aqueuses concentrées de différents acides forts ou de différentes bases fortes.

L'invention vise à pallier cet inconvénient.

On connaît aussi des procédures de livraison dans lesquelles une acquisition du spectre infra rouge (ou du spectre Raman) du liquide à livrer est réalisée en amont d'une vanne contrôlant l'introduction du liquide à livrer dans le réservoir de stockage à approvisionner. Dès lors que le spectre ne correspond pas au spectre caractéristique de la solution aqueuse attendue, la vanne est maintenue en position fermée. Un tel spectromètre infrarouge ne permet pas d'analyser un liquide à livrer tel que l'acide chlorhydrique, la soude, le peroxyde d'hydrogène, notamment. En outre, un tel spectromètre présente un coût élevé.

L'invention vise à pallier au moins l'un de ces inconvénients.

L'invention vise aussi à proposer un procédé d'identification prédictive d'un risque de mélange inapproprié et/ou accidentel et/ou nuisible de deux liquides qui soit fiable, simple dans sa mise en oeuvre et rapide pour l'obtention du résultat de cette prédiction.

L'invention vise aussi à proposer un tel procédé qui soit susceptible de pouvoir être mis en oeuvre en ligne sur une canalisation de raccordement et de livraison d'un telle matière liquide.

L'invention vise aussi à proposer un tel procédé dont le coût de mise en oeuvre et de maintenance est modéré.

L'invention vise aussi à proposer un tel procédé engageant des moyens de mesure dont la maintenance est relativement simple et limitée à une procédure régulière de calibration garantissant l'intégrité de ces moyens de mesure.

L'invention vise aussi à proposer un tel procédé susceptible d'intervenir avant tout mélange des matières liquides, même avant tout mélange de faibles quantités de telles matières liquides.

Pour ce faire, l'invention concerne un procédé d'identification prédictive d'un risque de mélange inapproprié d'un liquide, dit liquide à transférer, dont un transfert dans un contenant de stockage d'un liquide, dit liquide de stock, susceptible d'être contenu dans ledit contenant, est envisagé, procédé dans lequel :
- une mesure de conductivité électrique (σ) dudit liquide à transférer est réalisée sans dilution dudit liquide à transférer,
- la température dudit liquide à transférer dont la conductivité électrique est mesurée, est déterminée,
- la valeur de conductivité électrique mesurée est comparée aux valeurs de conductivité électrique d'un intervalle prédéterminé de valeurs de conductivité électrique correspondant audit liquide de stock à la température déterminée, et
- il n'est (préventivement) pas procédé au transfert dudit liquide à transférer dans ledit contenant de stockage lorsque la valeur mesurée de conductivité électrique (dudit liquide à transférer) n'appartient pas à l'intervalle prédéterminé de valeurs de conductivité électrique dudit liquide de stock à la température déterminée.

Le procédé selon l'invention permet d'identifier un risque de mélange inapproprié et éventuellement nuisible dudit liquide à transférer et dudit liquide de stock -susceptible d'être- contenu dans le contenant dans lequel le transfert dudit liquide à transférer est envisagé. Avantageusement, il permet d'identifier un tel risque préalablement à tout mélange dans le contenant de stockage. Le risque de survenue de nuisances pour l'homme et/ou l'environnement du fait de ce mélange nuisible est diminué, voire totalement aboli. Dans un procédé selon l'invention, il n'est procédé au transfert dudit liquide à transférer dans ledit contenant que lorsque la valeur de conductivité électrique mesurée appartient à un intervalle prédéterminé de valeurs de conductivité électrique dudit liquide de stock à la température déterminée.

L'intervalle prédéterminé de valeurs de conductivité électrique est un intervalle de confiance des valeurs de conductivité mesurées, cet intervalle de confiance étant représentatif de l'incertitude de mesure de la conductivité électrique, de l'incertitude de mesure de la température et de l'incertitude sur le titre massique dudit liquide à transférer, c'est-à-dire de l'incertitude sur le titre donné par le fabricant dudit liquide à transférer. Lorsque l'on applique le procédé à des liquides qui sont des produits techniques, ces derniers peuvent comprendre des impuretés qui sont susceptibles également de faire changer la conductivité électrique mesurée du liquide. Il est à noter que ces impuretés peuvent comprendre des additifs qui peuvent être différents selon les saisons en vue de stabiliser les liquides par rapport aux conditions environnementales telles que la température, l'hygrométrie etc. Tout ceci, explique notamment pourquoi l'invention utilise des intervalles de confiance des valeurs de conductivité électrique comme valeurs de référence du liquide de stock.

La température influence les interactions ioniques et donc la conductivité électrique des liquides concentrés. De ce fait, la détermination de la température du liquide à transférer permet de comparer la mesure de conductivité électrique du liquide à transférer avec un intervalle de conductivités électriques du liquide de stock attendu à cette même température. Cet intervalle de conductivités électriques, dit intervalle de confiance, est stocké dans une base de données qui peut être classifiée par température, par nature de liquide et par gamme de concentrations de ces liquides.

Dans tout le texte :
- le terme « liquide » désigne tout corps pur ou toute solution -notamment toute solution aqueuse- d'un tel corps pur, dans l'état liquide de cette matière à la pression atmosphérique. Le terme « liquide » désigne notamment tout corps pur ou toute solution d'un tel corps pur dans l'état liquide de cette matière à la pression atmosphérique qui soit exempt(e) de ce corps pur à l'état solide, en particulier cristallisé. Ainsi, le terme « liquide » désigne toute solution d'un tel corps pur dans laquelle le corps pur est intégralement dissous,
- les termes « incompatible » et « incompatibilité » et les expressions « liquides incompatibles » et « solutions incompatibles » qualifient de tels liquides qui sont chimiquement réactifs les uns avec les autres et dont le mélange - notamment le mélange accidentel et/ou incontrôlé- est susceptible de procurer des nuisances pour l'homme et/ou pour l'environnement. À titre d'exemple, sont considérés comme étant « incompatibles » entre eux, des acides minéraux ou organiques (aqueux ou anhydres) liquides distincts, des alcali (aqueux ou anhydres) liquides distincts, des agents oxydants (aqueux ou anhydres) liquides distincts ou des agents réducteurs (aqueux ou anhydres) liquides distincts, notamment. Peuvent aussi être considérés comme incompatibles entre eux, des solutions, notamment des solutions aqueuses d'un même acide minéral ou organique dans des concentrations différentes, des solutions, notamment aqueuses, d'un même alcali dans des concentrations différentes, des solutions -notamment aqueuses- d'un même agent oxydant dans des proportions différentes et des solutions aqueuses d'un même agent réducteur dans des concentrations différentes. Les nuisances susceptibles d'être procurées par de tels mélanges peuvent être de toute nature. Il peut s'agir d'une production -notamment par dégagement gazeux- d'un produit toxique résultant du mélange. Il peut s'agir d'un échauffement du mélange conduisant à une production et/ou un dégagement gazeux d'un produit toxique. Il peut aussi s'agir d'un échauffement rapide et/ou explosif du mélange. Tout autre type de nuisance est possible,

- on entend par « proportion massique » (m/m) d'un soluté dans une solution, le rapport de la masse du soluté présent dans la solution sur la masse totale de la solution,
- le terme « corps » ou l'expression « corps chimique » défini communément une espèce chimique constituée d'atomes. Il peut s'agir d'un « corps simple » définissant une espèce chimique constituée d'atomes du même élément. Il peut s'agir d'un « corps composé » définissant une espèce chimique constituée d'atomes d'éléments différents. Il peut s'agir d'un « corps pur » constitué d'une seule espèce chimique. Bien entendu, on entend par « corps pur », un corps constitué essentiellement d'une seule et même espèce chimique, mais dans lequel au moins une autre espèce chimique peut être présente à l'état de trace uniquement,
- le terme « intervalle » définit au sens mathématique du terme, un ensemble ordonné de valeurs comprises entre deux bornes. Un tel intervalle est ainsi constitué d'une suite continue de valeurs ordonnées s'étendant entre les deux bornes. On entend par « amplitude » d'un intervalle, la différence arithmétique entre la borne supérieure de cet intervalle et la borne inférieure de cet intervalle.

Dans des modes de réalisation, le procédé comporte une étape de comparaison de la conductivité électrique mesurée du liquide à transférer avec une base de données d'intervalles de conductivités électriques déterminés correspondant à des liquides présentant un risque de mélange inapproprié avec la conductivité électrique mesurée à la température déterminée, si la conductivité électrique mesurée correspond au moins en partie avec l'un desdits intervalles, il n'est pas procédé au transfert dudit liquide. Selon ces modes de réalisation, la conductivité électrique mesurée du liquide à transférer est comparée à la température déterminée, d'une part, à un intervalle de conductivités électriques attendu pour le liquide de stock, et d'autre part, à la base de données répertoriant les intervalles de conductivités électriques, dits de risque, qui correspondent à des valeurs de conductivité pour lesquelles il existe des risques de confusion entre le liquide de stock et un autre liquide incompatible avec le liquide de stock alors que leur mélange est inapproprié et susceptible de générer une réaction dangereuse.

L'incertitude de la mesure de conductivité électrique des liquides, qui a été évoqué précédemment, peut conduire à ce qu'un liquide à transférer corresponde, d'une part, à l'intervalle de conductivités électriques prédéterminé qui est compatible avec la conductivité électrique du liquide de stock à la température déterminée, et d'autre part, à un intervalle de conductivités électriques prédéterminés correspondant à un celui d'un liquide non compatible avec le liquide de stock, et ce, toujours à la température déterminée. L'introduction d'un second critère de comparaison permet de réduire encore le risque de mélanges inappropriés entre deux liquides incompatibles qui sont susceptibles de générer une réaction dangereuse et ce, malgré l'incertitude de la mesure de conductivités électriques des liquides.

Ainsi, lorsque la conductivité électrique mesurée du liquide à transférer se recoupe à la fois avec l'intervalle de conductivité de confiance qui correspond au liquide de stock et un intervalle de conductivité, dit de risque, correspondant à un liquide incompatible avec le liquide de stock, il n'est pas procédé au transfert de liquide.

Dans certains modes de réalisation, la température dudit liquide à transférer dont la conductivité électrique est mesurée, est déterminée par une mesure de cette température. Dans ces modes de réalisation, la valeur de conductivité électrique mesurée à la température mesurée est comparée à des valeurs prédéterminées de conductivité électrique dudit liquide de stock à la température mesurée. Dans ces modes de réalisation, les valeurs prédéterminées de conductivité électrique dudit liquide de stock à la température mesurée sont déterminées à partir d'un ensemble de valeurs de conductivité électrique dudit liquide de stock décrivant une droite décrivant la variation de la conductivité électrique dudit liquide de stock avec la température. Selon certains de ces modes de réalisation, la température mesurée est comprise entre +4°C et +30°C, notamment entre +4,8°C et +30°C. Dans ces modes de réalisation, la valeur de conductivité électrique mesurée à la température déterminée (mesurée) est comparée aux valeurs de conductivité électrique à cette température mesurée, de l'intervalle prédéterminé de valeurs de conductivité dudit liquide de stock.

Dans des modes de réalisation, le liquide à transférer et le liquide de stock comportent respectivement une proportion massique strictement supérieure à 0% et jusqu'à 100%, de préférence, leur proportion massique est comprise entre 6,5 et 100%. Cela permet notamment d'appliquer le procédé selon l'invention à des activités de chimie industrielle ou utilisant des liquides concentrés.

Dans certains autres modes de réalisation, la température dudit liquide à transférer dont la conductivité électrique est mesurée, est ajustée à une valeur de température prédéterminée, préalablement à la mesure de la conductivité électrique. En particulier, la température est ajustée à une valeur de +20°C +/-0,1 °C, préalablement à la mesure de conductivité électrique. Dans ces autres modes de réalisation, la valeur de conductivité électrique mesurée à la température ajustée à +20°C +/- 0,1 °C, est comparée aux valeurs de conductivité électrique à cette température de +20°C +/- 0,1 °C, de l'intervalle prédéterminé de valeurs de conductivité dudit liquide de stock. Rien n'empêche cependant de prévoir d'ajuster la température dudit liquide à transférer dont la conductivité électrique est mesurée, à une valeur de température prédéterminée inférieure à +20°C ou supérieure à +20°C.

Dans certains modes de réalisation dans lesquels la température dudit liquide à transférer dont la conductivité électrique est mesurée, est à une valeur de température de +20°C +/- 0,1 °C (mesurée ou ajustée), ledit liquide de stock est choisi dans un premier groupe de liquides de stock, formé :
- d'acide acétique (C₂H₄O₂) pur et de valeur de conductivité électrique nulle à une température de +20°C +/- 0,1°C,
- de solutions aqueuses de peroxyde d'hydrogène (H₂O₂) en proportion massique de 12% +/-1% et de valeur de conductivité électrique à une température de +20°C +/- 0,1°C, appartenant à un intervalle prédéterminé de valeurs de conductivité électrique comprises entre 0,070 mS/cm et 0,080 mS/cm (mS.cm⁻¹),
- de solutions aqueuses de peroxyde d'hydrogène (H₂O₂) en proportion massique de 35% +/-1% et de valeurs de conductivité électrique à une température de +20°C +/- 0,1°C, appartenant à un intervalle prédéterminé de valeurs de conductivité électrique comprises entre 0,120 mS/cm et 0,140 mS/cm,
- de solutions aqueuses d'acide acétique (C₂H₄O₂) en proportion massique de 75% +/-1% et de valeurs de conductivité électrique à une température de +20°C +/- 0,1°C, appartenant à un intervalle prédéterminé de valeurs de conductivité électrique comprises entre 0,150 mS/cm et 0,160 mS/cm,
- de solutions aqueuses d'ammoniaque (NH₄OH) en proportion massique de 20,5% +/-1% et de valeurs de conductivité électrique à une température de +20°C +/- 0,1°C, appartenant à un intervalle prédéterminé de valeurs de conductivité électrique comprises entre 0,900 mS/cm et 1,100 mS/cm,
- de solutions aqueuses d'acide citrique (C₆H₈O₇) en proportion massique de 50% +/-1% et de valeurs de conductivité électrique à une température 20°C +/- 0,1°C, appartenant à un intervalle prédéterminé de valeurs de conductivité électrique comprises entre 3,000 mS/cm et 3,500 mS/cm,
- de solutions aqueuses de chlorure ferrique (FeCℓ₃) en proportion massique de 41% +/-1% et de valeurs de conductivité électrique à une température de +20°C +/- 0,1°C, appartenant à un intervalle prédéterminé de valeurs de conductivité électrique comprises entre 35,000 mS/cm et 37,500 mS/cm,
- de solutions aqueuses de chlorite de sodium (NaCℓO₂) en proportion massique de 7,5% +/-1% et de valeurs de conductivité électrique à une température de +20°C +/- 0,1°C, appartenant à un intervalle prédéterminé de valeurs de conductivité électrique comprises entre 47,451 mS/cm et 49,368 mS/cm,
- de solutions aqueuses d'hypochlorite de sodium (NaOCℓ) présentant un pourcentage de chlore actif compris entre 9% et 16% et de valeurs de conductivité électrique à une température de +20°C +/- 0,1°C, appartenant à un intervalle prédéterminé de valeurs de conductivité électrique comprises entre 128,431 mS/cm et 142,800 mS/cm,
- de solutions aqueuses d'hydroxyde de sodium (NaOH) en proportion massique de 30,5% +/- 1% et de valeurs de conductivité électrique à une température de +20°C +/- 0,1°C, appartenant à un intervalle prédéterminé de valeurs de conductivité électrique comprises entre 182,353 mS/cm et 189,720 mS/cm,
- de solutions aqueuses d'acide sulfurique (H₂SO₄) en proportion massique de 70% +/- 1% et de valeurs de conductivité électrique à une température de +20°C +/- 0,1°C, appartenant à un intervalle prédéterminé de valeurs de conductivité électrique comprises entre 205,882 mS/cm et 214,200 mS/cm,
- de solutions aqueuses d'hydroxyde de sodium (NaOH) en proportion massique de 20% +/- 1% et de valeurs de conductivité électrique à une température de +20°C +/- 0,1°C , appartenant à un intervalle prédéterminé de valeurs de conductivité électrique comprises entre 326,471 mS/cm et 339,660 mS/cm, et
- de l'une (c'est-à-dire de l'une seule) des solutions choisies dans un deuxième groupe de liquides de stock, formé :
   ∘ des solutions aqueuses d'hydroxyde de sodium (NaOH) en proportion massique de 50% +/-1% et de valeurs de conductivité électrique à une température de +20°C +/- 0,1°C, appartenant à un intervalle prédéterminé de valeurs de conductivité électrique comprises entre 91,961 mS/cm et 95,676 mS/cm,
   ∘ des solutions aqueuses d'acide sulfurique (H₂SO₄) en proportion massique comprise entre 95% et 98% et de valeurs de conductivité électrique à une température de +20°C +/- 0,1°C, appartenant à un intervalle prédéterminé de valeurs de conductivité électrique comprises entre 95,392 mS/cm et 109,080 mS/cm,
   ∘ de solutions aqueuses de bisulfite de sodium (NaHSO₃) en proportion massique comprise entre 38% et 40% et de valeurs de conductivité électrique à une température de +20°C +/- 0,1°C, appartenant à un intervalle prédéterminé de valeurs de conductivité électrique comprises entre 97,745 mS/cm et 101,694 mS/cm,
   ∘ des solutions aqueuses de chlorite de sodium (NaCℓO₂) en proportion massique de 25% +/-1% et de valeurs de conductivité électrique à une température de +20°C +/- 0,1°C, appartenant à un intervalle prédéterminé de valeurs de conductivité électrique comprises entre 100,000 mS/cm et 104,040 mS/cm,
   ∘ des solutions aqueuses d'acide phosphorique (H₃PO₄) en proportion massique comprise entre 74,7% et 75,7% et de valeurs de conductivité électrique à une température de +20°C +/-0,1°C, appartenant à un intervalle prédéterminé de valeurs de conductivité électrique comprises entre 106,931 mS/cm et 117,160 mS/cm,
   ∘ de solutions aqueuses d'acide nitrique (HNOs) en proportion massique comprise entre 57% et 63% et de valeurs de conductivité électrique à une température de +20°C +/- 0,1°C, appartenant à un intervalle prédéterminé de valeurs de conductivité électrique comprises entre 491,089 mS/cm et 555,500 mS/cm,
   ∘ des solutions aqueuses d'acide sulfurique (H₂SO₄) en proportion massique de 50% +/-1% et de valeurs de conductivité électrique à une température de +20°C +/- 0,1°C, appartenant à un intervalle prédéterminé de valeurs de conductivité électrique comprises entre 502,941 mS/cm et 523,260 mS/cm,
   ∘ de solutions aqueuses d'acide nitrique (HNOs) en proportion massique de 53% +/-1% et de valeurs de conductivité électrique à une température de +20°C +/- 0,1°C , appartenant à un intervalle prédéterminé de valeurs de conductivité électrique comprises entre 561,765 mS/cm et 584,460 mS/cm,
   ∘ des solutions aqueuses d'acide chlorhydrique (HCℓ) en proportion massique de 9% +/-1% et de valeurs de conductivité électrique à une température de +20°C +/- 0,1°C, appartenant à un intervalle prédéterminé de valeurs de conductivité électrique comprises entre 553,922 mS/cm et 576,300 mS/cm,
   ∘ de solutions aqueuses d'acide nitrique (HNOs) en proportion massique de 15% +/-1% et de valeurs de conductivité électrique à une température de +20°C +/- 0,1°C, appartenant à un intervalle prédéterminé de valeurs de conductivité électrique comprises entre 572,549 mS/cm et 595,680 mS/cm.
   ∘ des solutions aqueuses d'acide chlorhydrique (HCℓ) en proportion massique de 33% +/-1% et de valeurs de conductivité électrique à une température de +20°C +/- 0,1°C, appartenant à un intervalle prédéterminé de valeurs de conductivité électrique comprises entre 595,050 mS/cm et 626,280 mS/cm,
   ∘ des solutions aqueuses d'acide chlorhydrique (HCℓ) en proportion massique de 35% +/-1% et de valeurs de conductivité électrique à une température de +20°C +/- 0,1°C, appartenant à un intervalle prédéterminé de valeurs de conductivité électrique comprises entre 563,725 mS/cm et 607,010 mS/cm,
   ∘ de solutions aqueuses d'acide chlorhydrique (HCℓ) en proportion massique comprise entre 30% et 35% et de valeurs de conductivité électrique à une température de +20°C +/- 0,1°C, appartenant à un intervalle prédéterminé de valeurs de conductivité électrique comprises entre 569,307 mS/cm et 645,390 mS/cm,
   ∘ de solutions aqueuses d'acide sulfurique (H₂SO₄) en proportion massique de 20% +/-1% et de valeurs de conductivité électrique à une température de +20°C +/- 0,1°C, appartenant à un intervalle prédéterminé de valeurs de conductivité électrique comprises entre 614,706 mS/cm et 639,540 mS/cm,
   ∘ des solutions aqueuses d'acide chlorhydrique (HCℓ) en proportion massique de 25% +/-1% et de valeurs de conductivité électrique à une température de +20°C +/- 0,1°C, appartenant à un intervalle prédéterminé de valeurs de conductivité électrique comprises entre 665,686 mS/cm et 692,580 mS/cm,
   ∘ de solutions aqueuses d'acide sulfurique (H₂SO₄) en proportion massique comprise entre 33% et 35% et de valeurs de conductivité électrique à une température de +20°C +/- 0,1°C, appartenant à un intervalle prédéterminé de valeurs de conductivité électrique comprises entre 684,314 mS/cm et 718,080 mS/cm,
   ∘ des solutions aqueuses d'acide sulfurique (H₂SO₄) en proportion massique de 40,6% +/-1% et de valeurs de conductivité électrique à une température de +20°C +/- 0,1°C, appartenant à un intervalle prédéterminé de valeurs de conductivité électrique comprises entre 670,588 mS/cm et 697.680 mS/cm,
   ∘ de solutions aqueuses d'acide nitrique (HNOs) en proportion massique de 25% +/-1% et de valeurs de conductivité électrique à une température de +20°C +/- 0,1°C, appartenant à un intervalle prédéterminé de valeurs de conductivité électrique comprises entre 716,667 mS/cm et 745,620 mS/cm, et
   ∘ de solutions aqueuses d'acide nitrique (HNOs) en proportion massique comprise entre 30% et 35% et de valeurs de conductivité électrique à une température de +20°C +/- 0,1°C, appartenant à un intervalle prédéterminé de valeurs de conductivité électrique comprises entre 724,510 mS/cm et 766,020 mS/cm,
et en ce que la valeur de conductivité électrique mesurée dudit liquide à transférer est comparée aux valeurs de conductivité électrique du liquide de stock à la température de +20°C +/- 0,1°C.

Dans tout le texte, on entend par « pourcentage de chlore actif » la masse de dichlore (Cℓ₂) susceptible d'être formé à partir de 100 g de solution aqueuse d'hypochlorite de sodium.

Dans ces modes de réalisation, l'incertitude de mesure de la conductivité électrique dudit liquide de stock est de l'ordre de 0,5%, l'incertitude de mesure de la température est de l'ordre de 0,2% de laquelle découle une incertitude de la valeur de conductivité électrique mesurée de l'ordre de 1%. Les intervalles prédéterminés de valeurs de conductivité électrique à +20°C rendent compte de la somme de ces incertitudes évaluées.

Les inventeurs ont observé que, bien qu'il soit connu que la conductivité électrique d'un liquide varie avec la concentration du(des) soluté(s) dans ce liquide et également avec la température, il reste néanmoins possible, de façon totalement surprenante, de pouvoir distinguer chacun desdits liquides de stock listés ci-dessus et de déterminer si le mélange dudit liquide à transférer et de l'un desdits liquide de stock est inapproprié, par une mesure de conductivité électrique à une température de +20°C +/- 0,1°C sans dilution dudit liquide à transférer. Une telle mesure de conductivité électrique permet d'éviter un mélange de deux liquides incompatibles.

La mesure de conductivité électrique dudit liquide à transférer permet de déterminer si ledit liquide à transférer présente ou non une valeur de conductivité électrique mesurée à une température de +20°C +/- 0,1°C correspondant à l'une des valeurs de conductivité électrique de l'intervalle prédéterminé de valeurs de conductivité électrique dudit liquide de stock susceptible d'être stocké -ou dudit liquide de stock stocké- dans le contenant dans lequel l'introduction dudit liquide à transférer est envisagée.

Dans un procédé selon l'invention, on détermine si ledit liquide à transférer se distingue dudit liquide de stock par sa valeur de conductivité électrique mesurée à une température de +20°C +/- 0,1°C, c'est-à-dire si ledit liquide à transférer présente une valeur de conductivité électrique mesurée à cette température, qui est distincte de chaque valeur de conductivité électrique à +20°C +/-0,1 °C de l'intervalle prédéterminé de valeurs correspondant audit liquide de stock -susceptible d'être- contenu dans ce contenant de stockage. On détermine ainsi l'incompatibilité ou la compatibilité vraisemblable dudit liquide à transférer et dudit liquide de stock préalablement à toute introduction dudit liquide à transférer dans le contenant de stockage. Des nuisances pour l'homme et/ou pour l'environnement sont ainsi évitées.

Dans certains autres modes de réalisation, la température dudit liquide à transférer dont la conductivité électrique est mesurée, est déterminée (mesurée et comprise entre +4,8°C et +30°C ou ajustée à la température de +20°C +/-0,1°C) et la valeur mesurée de conductivité électrique dudit liquide à transférer à la température déterminée est comparée aux valeurs de conductivité électrique de l'intervalle prédéterminé de valeurs de conductivité dudit liquide de stock à la température déterminée, ledit liquide de stock étant choisi dans un troisième groupe de liquides de stock formé :
- de solutions aqueuses de chlorure ferrique (FeCℓ₃) en proportion massique de 41% +/-1%,
- de solutions aqueuses de chlorite de sodium (NaCℓO₂) en proportion massique de 7,5% +/-1%,
- de solutions aqueuses d'hypochlorite de sodium (NaOCℓ) présentant un pourcentage de chlore actif compris entre 9% et 16%,
- de solutions aqueuses d'acide sulfurique (H₂SO₄) en proportion massique de 70% +/- 1%,
- de solutions aqueuses d'hydroxyde de sodium (NaOH) en proportion massique de 30,5% +/- 1%,
- de solutions aqueuses d'hydroxyde de sodium (NaOH) en proportion massique de 20% +/- 1%,
- de solutions aqueuses d'acide sulfurique (H₂SO₄) en proportion massique comprise entre 95% et 98%,
- de solutions aqueuses de bisulfite de sodium (NaHSOs) en proportion massique comprise entre 38% et 40%,
- de solutions aqueuses de chlorite de sodium (NaCℓO₂) en proportion massique de 25% +/-1%,
- de solutions aqueuses d'acide phosphorique (H₃PO₄) en proportion massique comprise entre 74,7% et 75,7%,
- de solutions aqueuses d'acide nitrique (HNOs) en proportion massique comprise entre 57% et 63%,
- de solutions aqueuses d'acide sulfurique (H₂SO₄) en proportion massique de 50% +/-1%,
- de solutions aqueuses d'acide nitrique (HNOs) en proportion massique de 53% +/-1%,
- de solutions aqueuses d'acide chlorhydrique (HCℓ) en proportion massique de 9% +/-1%,
- de solutions aqueuses d'acide nitrique (HNOs) en proportion massique de 15% +/-1%,
- de solutions aqueuses d'acide chlorhydrique (HCℓ) en proportion massique comprise entre 30% et 35% -notamment de solutions aqueuses d'acide chlorhydrique (HCℓ) en proportion massique de 33% +/-1% et de solutions aqueuses d'acide chlorhydrique (HCℓ) en proportion massique de 35% +/-1 %-,
- de solutions aqueuses d'acide sulfurique (H₂SO₄) en proportion massique de 20% +/-1%,
- de solutions aqueuses d'acide chlorhydrique (HCℓ) en proportion massique de 25% +/-1%,
- de solutions aqueuses d'acide sulfurique (H₂SO₄) en proportion massique comprise entre 33% et 35%,
- de solutions aqueuses d'acide sulfurique (H₂SO₄) en proportion massique de 40,6% +/-1%,
- de solutions aqueuses d'acide nitrique (HNO₃) en proportion massique comprise entre 30% et 35%,
- de solutions aqueuses d'acide nitrique (HNO₃) en proportion massique de 25% +/-1%.
et en ce que la température déterminée dudit liquide à transférer dont la conductivité électrique est mesurée est comprise entre +4,8°C et +30°C.

Dans certains modes de réalisation avantageux, la température dudit liquide à transférer dont la conductivité électrique est mesurée, étant déterminée - mesurée et comprise entre +4,8°C et +30°C ou ajustée à la température de +20°C +/- 0,1°C- et, la valeur mesurée de conductivité électrique dudit liquide à transférer est comparée aux valeurs de conductivité électrique à la même température comprise entre +4,8°C et +30°C, appartenant à l'intervalle prédéterminé de valeurs de conductivité dudit liquide de stock, ledit liquide de stock est choisi dans un quatrième groupe de liquides de stock formé :
- de solutions aqueuses de chlorure ferrique (FeCℓ₃) en proportion massique de 41% +/-1%,
- de solutions aqueuses de chlorite de sodium (NaCℓO₂) en proportion massique de 7,5% +/-1%,
- de solutions aqueuses de chlorite de sodium (NaCℓO₂) en proportion massique de 25% +/-1%,
- de solutions aqueuses d'hypochlorite de sodium (NaOCf) présentant un pourcentage de chlore actif compris entre 9% et 16%,
- de solutions aqueuses d'hydroxyde de sodium (NaOH) en proportion massique de 30,5% +/-1%,
- de solutions aqueuses d'hydroxyde de sodium (NaOH) en proportion massique de 20% +/- 1%,
- de solutions aqueuses d'acide sulfurique (H₂SO₄) en proportion massique de 50% +/- 1%,
- de solutions aqueuses d'acide sulfurique (H₂SO₄) en proportion massique de 40,6% +/- 1%,
- de solutions aqueuses d'acide chlorhydrique (HCℓ) en proportion massique de 9% +/-1%,
- de solutions aqueuses d'acide chlorhydrique (HCℓ) en proportion massique de 33% +/-1%.

Dans ce mode de réalisation avantageux, chacun desdits liquides de stock du quatrième groupe de liquides de stock est identifiable et distinguable de chacun desdits autres liquides de stock du quatrième groupe par sa conductivité électrique à chaque température déterminée.

Dans certains autres modes de réalisation avantageux, la température dudit liquide à transférer dont la conductivité électrique est mesurée, étant déterminée -mesurée et comprise entre +4,8°C et +30°C ou ajustée à la température de +20°C +/- 0,1°C- et, la valeur mesurée de conductivité électrique dudit liquide à transférer est comparée aux valeurs de conductivité électrique à la même température comprise entre +4,8°C et +30°C, appartenant à l'intervalle prédéterminé de valeurs de conductivité dudit liquide de stock,
ledit liquide de stock est choisi dans un cinquième groupe de liquides de stock formé :
- de solutions aqueuses de chlorure ferrique (FeCℓ₃) en proportion massique de 41% +/-1%,
- de solutions aqueuses de chlorite de sodium (NaCℓO₂) en proportion massique de 7,5% +/-1%,
- de solutions aqueuses d'acide sulfurique (H₂SO₄) en proportion massique comprise entre 95% et 98%,
- de solutions aqueuses d'hypochlorite de sodium (NaOCℓ) présentant un pourcentage de chlore actif compris entre 9% et 16%,
- de solutions aqueuses d'hydroxyde de sodium (NaOH) en proportion massique de 30,5% +/-1%,
- de solutions aqueuses d'hydroxyde de sodium (NaOH) en proportion massique de 20% +/-1%,
- de solutions aqueuses d'acide nitrique (HNO₃) en proportion massique comprise entre 57% et 63%,
- de solutions aqueuses d'acide nitrique (HNO₃) en proportion massique de 53% +/-1%,
- de solutions aqueuses d'acide chlorhydrique (HCℓ) en proportion massique de 33% +/-1%.
- de solutions aqueuses d'acide sulfurique (H₂SO₄) en proportion massique de 40,6% +/- 1%, et
- de solutions aqueuses d'acide nitrique (HNO₃) en proportion massique comprise entre 30% et 35%.

Dans ce mode de réalisation avantageux, chacun desdits liquides de stock du cinquième groupe de liquides de stock est identifiable et distinguable de chacun desdits autres liquides de stock du cinquième groupe par sa conductivité électrique à la température déterminée.

Dans certains autres modes de réalisation, la température dudit liquide à transférer dont la conductivité électrique est mesurée étant déterminée et comprise entre +20°C et +30°C, la valeur mesurée de conductivité électrique dudit liquide à transférer est comparée aux valeurs de conductivité électrique à la même température comprise entre +20°C et +30°C, appartenant à l'intervalle prédéterminé de valeurs de conductivité dudit liquide de stock,
ledit liquide de stock étant choisi dans le groupe de liquides de stock formé des solutions aqueuses d'hydroxyde de sodium (NaOH) en proportion massique de 50% +/-1%.

Dans certains autres modes de réalisation, la température dudit liquide à transférer dont la conductivité électrique est mesurée étant déterminée et comprise entre +21°C et +30°C, la valeur mesurée de conductivité électrique dudit liquide à transférer est comparée aux valeurs de conductivité électrique à la même température comprise entre +21°C et +30°C, appartenant à l'intervalle prédéterminé de valeurs de conductivité dudit liquide de stock,
ledit liquide de stock étant choisi dans le groupe de liquides de stock formé des solutions aqueuses d'acide phosphorique (H₃PO₄) en proportion massique de 85% +/-1%.

Dans certains modes de réalisation particuliers du procédé selon l'invention, le contenant de stockage dudit liquide de stock est un contenant de stockage d'une pluralité de contenants de stockage,
chaque contenant de stockage de cette pluralité de contenants étant destiné à contenir un liquide de stock distinct des liquides de stock -susceptibles d'être-contenus dans les autres contenants de la pluralité de contenants de stockage, chaque contenant étant destiné à contenir un liquide de stock de conductivité électrique à la température déterminée -mesurée et comprise entre 4,8°C et 30°C ou ajustée à la température de +20°C +/- 0,1°C- comprise dans un intervalle prédéterminé de valeurs de conductivité électrique à la température déterminée disjoint de l'intervalle prédéterminé de valeurs de conductivité électrique à la température déterminée de chacun des liquides de stock (susceptible d'être) contenu dans les autres contenants de la pluralité de contenants de stockage, et Il n'est procédé à aucun transfert dudit liquide à transférer dans l'un des contenant de la pluralité de contenants, lorsque la valeur mesurée de conductivité électrique dudit liquide à transférer n'appartient à aucun des intervalles prédéterminés de valeurs de conductivité électrique à la température déterminée des liquides de stock.

Dans ces modes de réalisation, on sélectionne un contenant de stockage de la pluralité de contenants de stockage par tout moyen d'identification de ce contenant de stockage puis on valide, par le procédé selon l'invention, qu'un risque de mélange inapproprié dudit liquide à transférer et dudit liquide de stock contenu ou susceptible d'être contenu dans le contenant de stockage sélectionné n'est pas identifié.

Dans ces modes de réalisation, la valeur de conductivité électrique dudit liquide à transférer mesurée à la température déterminée est comparée à chaque intervalle prédéterminé de valeurs de conductivité électrique de chacun desdits liquides de stock d'une pluralité de liquides de stock associés chacun à un contenant de stockage de la pluralité de contenants de stockage.

Dans certains de ces modes de réalisation particuliers, ledit liquide à transférer est réceptionné sur un site, dit site de stockages multiples, comprenant une pluralité de contenants de stockage, chaque contenant de stockage étant destiné à contenir un unique liquide de stock choisi dans un sixième groupe de liquides de stocks (en réception), formé :
- de solutions d'hypochlorite de sodium présentant un pourcentage de chlore actif compris entre 9% et 16%,
- de solutions de chlorite de sodium en proportion massique de 25% +/- 1%,
- de solutions de chlorure ferrique en proportion massique de 41% +/- 1%,
- de solutions de bisulfite de sodium en proportion massique comprise entre 38% et 40%,
- de solutions d'hydroxyde de sodium en proportion massique de 50% +/- 1%,
- de solutions d'acide chlorhydrique en proportion massique comprise entre 30% et 35% -notamment de solutions aqueuses d'acide chlorhydrique (HCℓ) en proportion massique de 33% +/-1% et de solutions aqueuses d'acide chlorhydrique (HCℓ) en proportion massique de 35% +/-1%-,
- de solutions d'acide nitrique en proportion massique de 53% +/- 1%,
- de solutions d'acide nitrique en proportion massique comprise entre 57% et 63%,
- de solutions d'acide sulfurique en proportion massique de 40,6% +/- 1%,
- de solutions d'acide sulfurique en proportion massique comprise entre 95% et 98%,
- de solutions d'acide phosphorique en proportion massique comprise entre 74,7% et 75,7%,
- de solutions d'acide phosphorique en proportion massique de 85% +/- 1%,
- de solutions de peroxyde d'hydrogène en proportion massique de 35% +/-1%, et
- de solutions d'ammoniaque en proportion massique de 20,5% +/- 1%.

Dans certains autres modes de réalisation particuliers, ledit liquide à transférer est réceptionné sur un site, dit site de livraison, comprenant un unique contenant de stockage ou, le cas échéant un faible nombre de contenants de stockage, chaque contenant de stockage étant destiné à contenir un unique liquide de stock choisi dans un septième groupe de liquides de stocks (en livraison), formé :
- de solutions de chlorite de sodium en proportion massique de 7,5% +/- 1%,
- de solutions d'hydroxyde de sodium en proportion massique de 20% +/- 1%,
- de solutions d'hydroxyde de sodium en proportion massique de 30,5% +/- 1%,
- de solutions d'acide chlorhydrique en proportion massique de 9% +/- 1%,
- de solutions d'acide chlorhydrique en proportion massique de 25% +/- 1%,
- de solutions d'acide chlorhydrique en proportion massique comprise entre 30% et 35% -notamment de solutions aqueuses d'acide chlorhydrique en proportion massique de 33% +/-1% et de solutions aqueuses d'acide chlorhydrique en proportion massique de 35% +/-1%-,
- de solutions d'acide nitrique en proportion massique de 15% 1%,
- de solutions d'acide nitrique en proportion massique de 25% +/- 1%,
- de solutions d'acide nitrique en proportion massique comprise entre 30% et 35%,
- de solutions d'acide nitrique en proportion massique de 53% +/- 1%,
- de solutions d'acide nitrique en proportion massique comprise entre 57% et 63%,
- de solutions d'acide sulfurique en proportion massique de 20% +/- 1%,
- de solutions d'acide sulfurique en proportion massique comprise entre 33% et 35%,
- de solutions d'acide sulfurique en proportion massique de 50% +/- 1%,
- de solutions d'acide sulfurique en proportion massique de 70% +/- 1%,
- de solutions d'acide sulfurique en proportion massique comprise entre 95% et 98%,
- de solutions d'acide acétique en proportion massique de 75% +/- 1%,
- de solutions d'acide acétique en proportion massique de 100%,
- de solutions d'acide citrique en proportion massique de 50% +/- 1%,
- de solutions de peroxyde d'hydrogène en proportion massique de 12% +/-1%, et
- de solutions de peroxyde d'hydrogène en proportion massique de 35% +/-1%. Dans ces modes de réalisation, il est procédé au transfert dudit liquide à transférer dans ledit contenant de stockage sur un site d'utilisation finale dudit liquide à transférer.

Dans certains modes particuliers de mise en oeuvre, le procédé selon l'invention vise à identifier de façon préventive un risque de mélange inapproprié d'un liquide acide et d'une solution aqueuse d'hypochlorite de sodium présentant un pourcentage de chlore actif compris entre 9% et 16%, dont le mélange est susceptible de procurer un dégagement nuisible de chlore (Cℓ₂) gazeux,

Dans ces modes de mise en oeuvre particuliers, la température dudit liquide à transférer dont la conductivité électrique est mesurée étant déterminée - mesurée et comprise entre +4,8°C et +30°C ou ajustée à la température de +20°C +/-0,1°C-, la valeur mesurée de conductivité électrique dudit liquide à transférer est comparée aux valeurs de conductivité électrique appartenant à l'intervalle prédéterminé de valeurs de conductivité dudit liquide de stock à la même température déterminée -mesurée et comprise entre +4,8°C et +30°C ou ajustée à la température de +20°C +/-0,1°C-,
ledit liquide de stock étant choisi dans un huitième groupe de liquides de stock, formé :
   - des solutions aqueuses d'hypochlorite de sodium présentant un pourcentage de chlore actif compris entre 9% et 16%,
   - des solutions aqueuses d'acide chlorhydrique en proportion massique comprise entre 9% et 35%,
   - des solutions aqueuses d'acide nitrique en proportion massique comprise entre 15% et 63%,
   - des solutions aqueuses d'acide sulfurique en proportion massique comprise entre 20% et 70%,
   - des solutions aqueuses d'acide sulfurique en proportion massique comprise entre 95% et 98%,
   - des solutions aqueuses d'acide phosphorique en proportion massique comprise entre 30% et 60%,
   - des solutions aqueuses d'acide phosphorique en proportion massique inférieure à 15%,
   - des solutions aqueuses d'acide phosphorique en proportion massique comprise entre 74% et 85%,
   - des solutions aqueuses de chlorure ferrique en proportion massique inférieure à 41 %,
   - des solutions aqueuses d'acide acétique, et
   - des solutions aqueuses d'acide citrique en proportion massique inférieure à 50%,
et en ce que la température déterminée dudit liquide à transférer dont la conductivité électrique est mesurée est comprise entre +4,8°C et +30°C, procédé dans lequel il n'est pas procédé au transfert dudit liquide à transférer dans ledit contenant de stockage dans chacune des première et deuxième situations suivantes :
   - la valeur mesurée de conductivité électrique dudit liquide à transférer à la température déterminée (ajustée à la température de +20°C +/-0,1 °C ou mesurée à une température comprise entre +4,8°C et +30°C) n'appartient pas à l'intervalle prédéterminé de valeurs de conductivité électrique dudit liquide de stock à la température déterminée, ledit liquide de stock étant une solution aqueuse d'hypochlorite de sodium présentant un pourcentage de chlore actif compris entre 9% et 16% (première situation), et
   - la valeur mesurée de conductivité électrique dudit liquide à transférer à la température déterminée (ajustée à la température de +20°C +/-0,1 °C ou mesurée à une température comprise entre +4,8°C et +30°C) appartient à l'intervalle prédéterminé de valeurs de conductivité électrique d'une solution aqueuse d'hypochlorite de sodium présentant un pourcentage de chlore actif compris entre 9% et 16% à la température déterminée, ledit liquide de stock étant distinct d'une solution aqueuse d'hypochlorite de sodium présentant un pourcentage de chlore actif compris entre 9% et 16% (deuxième situation).

Dans certains modes de réalisation du procédé selon l'invention, un capteur de mesure de conductivité électrique par induction est utilisé pour la mesure de conductivité électrique.

Dans certains modes de réalisation avantageux d'un procédé selon l'invention :
- une mesure de masse volumique dudit liquide à transférer est réalisée sans dilution dudit liquide à transférer,
- la valeur de masse volumique mesurée est comparée à des valeurs prédéterminées de masse volumique dudit liquide de stock à la température déterminée, et
- il n'est pas procédé au transfert dudit liquide à transférer dans ledit contenant de stockage lorsque la valeur de masse volumique mesurée n'appartient pas à un intervalle prédéterminé de valeurs de masse volumique dudit liquide de stock à la température déterminée.

Ces modes de réalisation avantageux du procédé selon l'invention procurent une double barrière technique de protection vis-à-vis du risque de mélange inapproprié dudit liquide à transférer et dudit liquide de stock.

L'invention concerne aussi un procédé d'approvisionnement -par remplissage partiel ou total- d'un contenant de stockage d'un liquide, dit liquide de stock, susceptible d'être contenu dans ledit contenant, avec un liquide, dit liquide à transférer, contenu dans une citerne d'un véhicule automobile de livraison,
le contenant de stockage étant un contenant d'une installation fixe, c'est à dire non mobile en comparaison du véhicule automobile de livraison, adaptée pour recevoir le véhicule automobile de livraison,
procédé dans lequel est mis en oeuvre un procédé selon l'invention d'identification prédictive d'un risque de mélange inapproprié dudit liquide à transférer et dudit liquide de stock.

L'invention concerne donc un procédé d'approvisionnement d'un contenant de stockage d'un liquide, dit liquide de stock, susceptible d'être contenu dans ledit contenant, avec un liquide, dit liquide à transférer, contenu dans une citerne d'un véhicule automobile de livraison,
le contenant de stockage étant un contenant d'un site fixe de réception du véhicule automobile de livraison,
procédé dans lequel, un procédé d'identification prédictive d'un risque de mélange inapproprié dudit liquide à transférer et dudit liquide de stock est mis en oeuvre,
procédé d'identification dans lequel :
   - une mesure de conductivité électrique (σ) dudit liquide à transférer est réalisée sans dilution dudit liquide à transférer,
   - la température dudit liquide à transférer dont la conductivité électrique est mesurée, est déterminée,
   - la valeur de conductivité électrique mesurée est comparée à des valeurs prédéterminées de conductivité électrique dudit liquide de stock à la température déterminée, et
   - il n'est pas procédé au transfert dudit liquide à transférer contenu dans la citerne du véhicule automobile de livraison, dans ledit contenant de stockage lorsque la valeur de conductivité électrique mesurée n'appartient pas à un intervalle prédéterminé de valeurs de conductivité électrique dudit liquide de stock à la température déterminée.

Le procédé d'approvisionnement permet de prévenir un mélange inapproprié de liquides incompatibles, ce mélange inapproprié étant susceptible de procurer des nuisances pour l'homme et/ou pour l'environnement.

Dans certains modes de réalisation, le véhicule automobile de livraison comprend une pluralité de citernes.

Dans certains modes de réalisation :
- un raccordement de l'une des citernes de la pluralité de citernes au contenant de stockage est effectué,
- une mesure de la conductivité électrique dudit liquide à transférer contenu dans cette citerne, sans dilution dudit liquide à transférer et une mesure de la température dudit liquide à transférer sont réalisées,
   procédé dans lequel il n'est pas procédé au transfert dudit liquide à transférer dans ledit contenant de stockage lorsque la valeur de conductivité électrique mesurée n'appartient pas à l'intervalle prédéterminé de valeurs de conductivité électrique dudit liquide de stock à la température mesurée.

Dans certains modes de réalisation du procédé d'approvisionnement selon l'invention, le véhicule automobile de livraison est choisi pour comprendre une pluralité de citernes.

Dans ces modes de réalisation du procédé d'approvisionnement selon l'invention, il est procédé :
- à un raccordement de l'une des citernes de la pluralité de citerne au contenant de stockage, puis
- à une mesure de la conductivité électrique dudit liquide à transférer contenu dans cette citerne, sans dilution dudit liquide à transférer, et
- à une mesure de la température dudit liquide à transférer,
procédé dans lequel il n'est pas procédé au transfert dudit liquide à transférer dans ledit contenant de stockage lorsque la valeur de conductivité électrique mesurée n'appartient pas à l'intervalle prédéterminé de valeurs de conductivité électrique dudit liquide de stock à la température mesurée.

Dans certains modes de réalisation du procédé d'approvisionnement selon l'invention, le transfert est réalisé par une activation d'un dispositif de pompage dudit liquide à transférer dans la citerne et de refoulement dudit liquide à transférer dans le contenant de stockage.

Dans certains modes de réalisation d'un procédé d'approvisionnement selon l'invention, ledit liquide à transférer contenu dans la citerne du véhicule automobile de livraison est introduit dans un contenant fixe de stockage d'un poste de dépotage. Dans ces modes de réalisation, la citerne est raccordée à au moins un contenant fixe de stockage au moyen d'un conduit muni d'une vanne d'ouverture/fermeture du conduit. Rien n'empêche de prévoir que la vanne soit une pompe de refoulement présentant une voie d'entrée dudit liquide à transférer dans la pompe et une voie de sortie raccordée au contenant fixe de stockage, notamment d'une pluralité de contenant fixe de stockage du poste de dépotage. Dans ce mode de réalisation, la pompe à l'arrêt fait office de vanne close et la pompe en fonctionnement fait office de vanne ouverte. Rien n'empêche non plus de prévoir que la vanne soit une vanne multivoie présentant une voie d'entrée dudit liquide à transférer dans la vanne multivoie et une pluralité de voies de sortie, chaque voie de sortie étant raccordée à un contenant fixe de stockage d'une pluralité de contenant fixe de stockage du poste de dépotage.

Dans certains modes de réalisation du procédé d'approvisionnement selon l'invention, les mesures de conductivité électrique et de température dudit liquide à transférer sont réalisées sur une canalisation d'amenée dudit liquide à transférer dans le contenant de stockage.

Rien n'empêche cependant que dans certains autres modes de réalisation du procédé d'approvisionnement selon l'invention, un échantillon dudit liquide à transférer soit prélevé et porté (ajusté) à une température comprise entre +4,8°C et +30°C, notamment à la température de +20°C, une mesure de conductivité électrique de cet échantillon -et le cas échéant une mesure de la masse volumique de cet échantillon- dudit liquide à transférer étant effectuée(s) à cette température ajustée.

L'invention concerne aussi un procédé de transfert d'un liquide à transférer dans une citerne ou une pluralité de citernes d'un véhicule automobile de livraison, la ou la pluralité de citernes étant susceptibles de contenir un liquide de stock,
le liquide à transférer étant contenu dans un contenant d'une installation fixe adaptée pour recevoir le véhicule automobile de livraison,
procédé de transfert dans lequel est mis en oeuvre un procédé selon l'invention d'identification prédictive d'un risque de mélange inapproprié dudit liquide à transférer et dudit liquide de stock.

L'invention permet également de vérifier si le contenant de l'installation fixe contient un liquide à transférer qui est compatible d'un liquide de stock déjà contenu par la ou les citernes d'un véhicule de livraison.

L'invention concerne aussi un véhicule automobile de livraison pour la mise en oeuvre d'un procédé d'approvisionnement selon l'invention, le véhicule automobile de livraison étant équipé de :
- au moins une citerne contenant ledit liquide à transférer,
- au moins un dispositif de mesure de conductivité électrique dudit liquide à transférer,
- au moins un dispositif de mesure de la température dudit liquide à transférer dont la conductivité électrique est mesurée,
- au moins un dispositif de pompage dudit liquide à transférer dans la citerne et de refoulement dudit liquide à transférer dans le contenant de stockage,
- au moins un lecteur d'un identifiant d'un contenant de stockage dudit liquide de stock,
- un dispositif informatique adapté pour pouvoir :
   ∘ recevoir des données transmises par les dispositifs de mesure de conductivité électrique et de mesure de température,
   ∘ recevoir des données d'identification du contenant de stockage dudit liquide de stock, transmises par le lecteur d'identifiant,
   ∘ consulter une base de données comprenant les valeurs de l'intervalle prédéterminé de valeurs de conductivité électrique dudit liquide de stock à la température mesurée,
   ∘ comparer les données transmises par le dispositif de mesure de conductivité électrique et les valeurs de l'intervalle prédéterminé de valeurs de conductivité électrique dudit liquide de stock à la température mesurée, correspondant aux données transmises par le lecteur d'identifiant, les valeurs de l'intervalle prédéterminé de valeurs de conductivité électrique étant stockées dans une base de données, et
   ∘ activer le dispositif de pompage seulement lorsque la valeur de conductivité électrique mesurée appartient à l'intervalle prédéterminé de valeurs de conductivité électrique dudit liquide de stock à la température mesurée.

Dans ces modes de réalisation, l'identifiant porté par le contenant de stockage est choisi dans le groupe formé d'un code-barre, d'un code matriciel - notamment d'un code QR- et d'un composant électronique apte à transmettre des données par radiofréquence -notamment d'un microcircuit ou d'une étiquette RFID ou NFC (« Near-Field Communication »)-. Le lecteur d'identifiant est un lecteur d'identifiant choisi pour pouvoir lire les données de l'identifiant et choisi dans le groupe formé d'un lecteur de code-barre, d'un lecteur de code-QR, d'un lecteur apte à recevoir des données par radiofréquence -notamment d'un lecteur RFID- et d'un lecteur apte à recevoir des données par hautes fréquences - notamment un périphérique NFC.

Les dispositifs de mesure de conductivité électrique et de température communiquent avec le dispositif informatique et lui transmettent les valeurs de conductivité électrique et de température mesurées. Le dispositif informatique interroge une base de données comprenant les valeurs de conductivité électrique de l'intervalle prédéterminé de valeurs de conductivité électrique dudit liquide de stock à la température mesurée et correspondant à l'identifiant du contenant de stockage et compare la valeur de conductivité électrique mesurée aux valeurs de l'intervalle prédéterminé. Lorsque la valeur de conductivité électrique mesurée est comprise dans l'intervalle prédéterminé, le dispositif informatique délivre une commande autorisant le transfert dudit liquide à transférer dans le contenant de stockage correspondant. Cette commande peut être une commande d'ouverture d'une vanne d'ouverture/fermeture d'un conduit de raccordement de la citerne et du contenant de stockage. Cette commande peut aussi être une commande d'activation d'un dispositif de pompage/refoulement dudit liquide à transférer dans le conduit de raccordement de la citerne et du contenant de stockage. Rien n'empêche de prévoir que la base de données comprenne des valeurs de conductivité électrique d'intervalles prédéterminés distincts, chaque intervalle correspondant à un contenant de stockage d'un liquide de stock et que le dispositif informatique délivre une commande à une vanne multivoie de façon à transférer ledit liquide à transférer dans le contenant de stockage correspondant à la valeur de conductivité électrique mesurée.

Mais l'invention s'étend aussi à un procédé de sécurisation d'un transfert d'un liquide, dit liquide à transférer, dans un contenant de stockage d'un liquide, dit liquide de stock, susceptible d'être contenu dans ledit contenant -c'est à dire un procédé permettant d'éviter un mélange inapproprié dudit liquide à transférer et dudit liquide de stock dans le contenant de stockage dudit liquide de stock, ledit liquide à transférer et ledit liquide de stock étant des liquides distincts et étant tels que leur mélange est inapproprié et, le cas échéant, susceptible de procurer des nuisances pour l'homme et/ou pour l'environnement-, procédé dans lequel :
- une mesure de conductivité électrique (σ) dudit liquide à transférer est réalisée sans dilution dudit liquide à transférer,
- la température dudit liquide à transférer dont la conductivité électrique est mesurée, est déterminée,
- la valeur de conductivité électrique mesurée est comparée aux valeurs de conductivité électrique d'un intervalle prédéterminé de valeurs de conductivité électrique correspondant audit liquide de stock à la température déterminée, et dans lequel
- il n'est procédé au transfert dudit liquide à transférer dans ledit contenant de stockage que lorsque la valeur mesurée de conductivité électrique (dudit liquide à transférer) appartient à l'intervalle prédéterminé de valeurs de conductivité électrique dudit liquide de stock contenu dans le contenant, l'intervalle prédéterminé de valeurs de conductivité électrique dudit liquide de stock correspondant aux valeurs de conductivité dudit liquide de stock à la température déterminée.

Dans un premier mode de mise en oeuvre d'un tel procédé de sécurisation, ledit liquide de stock est choisi dans le quatrième groupe suivant de liquides de stock, formé :
- de solutions aqueuses de chlorure ferrique (FeCℓ₃) en proportion massique de 41% +/-1%,
- de solutions aqueuses de chlorite de sodium (NaCℓO₂) en proportion massique de 7,5% +/-1%,
- de solutions aqueuses de chlorite de sodium (NaCℓO₂) en proportion massique de 25% +/-1%,
- de solutions aqueuses d'hypochlorite de sodium (NaOCℓ) présentant un pourcentage de chlore actif compris entre 9% et 16%,
- de solutions aqueuses d'hydroxyde de sodium (NaOH) en proportion massique de 30,5% +/- 1%,
- de solutions aqueuses d'hydroxyde de sodium (NaOH) en proportion massique de 20% +/- 1%,
- de solutions aqueuses d'acide sulfurique (H₂SO₄) en proportion massique de 50% +/- 1%,
- de solutions aqueuses d'acide sulfurique (H₂SO₄) en proportion massique de 40,6% +/- 1%,
- de solutions aqueuses d'acide chlorhydrique (HCℓ) en proportion massique de 9% +/-1%,
- de solutions aqueuses d'acide chlorhydrique (HCℓ) en proportion massique de 33% +/-1%.

Dans un deuxième mode de mise en oeuvre d'un tel procédé de sécurisation, ledit liquide de stock est choisi dans le cinquième groupe suivant de liquides de stock, formé :
- de solutions aqueuses de chlorure ferrique (FeCℓ₃) en proportion massique de 41% +/-1%,
- de solutions aqueuses de chlorite de sodium (NaCℓO₂) en proportion massique de 7,5% +/-1%,
- de solutions aqueuses d'acide sulfurique (H₂SO₄) en proportion massique comprise entre 95% et 98%,
- de solutions aqueuses d'hypochlorite de sodium (NaOCℓ) présentant un pourcentage de chlore actif compris entre 9% et 16%,
- de solutions aqueuses d'hydroxyde de sodium (NaOH) en proportion massique de 30,5% +/-1%,
- de solutions aqueuses d'hydroxyde de sodium (NaOH) en proportion massique de 20% +/-1%,
- de solutions aqueuses d'acide nitrique (HNO₃) en proportion massique comprise entre 57% et 63%,
- de solutions aqueuses d'acide nitrique (HNO₃) en proportion massique de 53% +/-1%,
- de solutions aqueuses d'acide chlorhydrique (HCℓ) en proportion massique de 33% +/-1%.
- de solutions aqueuses d'acide sulfurique (H₂SO₄) en proportion massique de 40,6% +/- 1%, et
- de solutions aqueuses d'acide nitrique (HNO₃) en proportion massique comprise entre 30% et 35%.

Dans ces premier et deuxième modes de mise en oeuvre d'un tel procédé de sécurisation, ledit liquide à transférer est choisi respectivement dans le quatrième et cinquième groupe de solutions.

L'invention concerne également un procédé d'identification prédictive d'un risque de mélange inapproprié d'un liquide, dit liquide à transférer, dont un transfert dans un contenant de stockage d'un liquide, dit liquide de stock, susceptible d'être contenu dans ledit contenant, est envisagé, un procédé d'approvisionnement d'un contenant de stockage et un véhicule automobile de livraison pour mettre en oeuvre ce procédé, caractérisés en combinaison par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante qui se réfère aux figures annexées données uniquement à titre de description non limitative de certains modes de réalisation particuliers de l'invention et, dans lesquelles :
[fig. 1] La figure 1 est un logigramme illustratif d'un premier mode de réalisation d'un procédé selon l'invention,
[fig. 2] La figure 2 est un logigramme illustratif d'une variante du premier mode de réalisation d'un procédé selon l'invention,
[fig. 3] La figure 3 est un logigramme illustratif d'un deuxième mode de réalisation d'un procédé selon l'invention,
[fig. 4] La figure 4 est un logigramme illustratif d'une variante du deuxième mode de réalisation d'un procédé selon l'invention,
[fig. 5] La figure 5 est une illustration schématique d'une installation dans laquelle est mise en oeuvre le premier mode de réalisation d'un procédé selon l'invention,
[fig. 6] La figure 6 est une illustration schématique d'une installation dans laquelle est mise en oeuvre une variante du premier mode de réalisation d'un procédé selon l'invention,
[fig. 7] La figure 7 est une illustration schématique d'une installation dans laquelle est mise en oeuvre la variante du premier mode de réalisation d'un procédé selon l'invention dont un logigramme est représenté en figure 2,
[fig. 8] La figure 8 est une illustration schématique d'une installation dans laquelle est mise en oeuvre le deuxième mode de réalisation d'un procédé selon l'invention,
[fig. 9] La figure 9 est une illustration schématique d'une installation dans laquelle est mise en oeuvre une première variante du deuxième mode de réalisation d'un procédé selon l'invention,
[fig. 10] La figure 10 est une illustration schématique d'une installation dans laquelle est mise en oeuvre une deuxième variante du deuxième mode de réalisation d'un procédé selon l'invention,
[fig. 11] La figure 11 est une représentation graphique de la variation de la conductivité électrique (σ) d'un premier ensemble de liquides de stock en fonction de la température, et
[fig. 12] La figure 12 est une représentation graphique de la variation de la conductivité électrique (σ) d'un deuxième ensemble de liquides de stock en fonction de la température.
[fig. 13] est une représentation d'un exemple de matrice d'incompatibilité de liquides pour lesquels l'invention permet de distinguer clairement leur conductivité électrique.
[Fig 14] est un graphique qui illustre, un exemple, de recouvrement des intervalles de conductivités électriques pour deux liquides incompatibles, ici, l'acide sulfurique à environ 96% de proportion massique et le chlorite de sodium à 25% de proportion massique.
[Fig. 15] un graphique qui illustre, un autre exemple, de recouvrement des intervalles de conductivités électriques pour deux liquides incompatibles, ici, l'acide nitrique à environ 53% de proportion massique et l'acide chloridrique à environ 35% de proportion massique.

Lors d'une livraison d'un liquide dangereux, par exemple d'un liquide acide, alcalin, oxydant ou réducteur, sur un site de livraison et le transfert de ce liquide dangereux à partir d'une citerne d'un véhicule de livraison dans un contenant de stockage situé sur le site de réception, il convient de limiter au mieux -voire supprimer totalement- le risque de transférer le liquide dangereux dans un contenant distinct du contenant destiné à recevoir ce liquide dangereux, ce contenant distinct étant susceptible de contenir une matière, notamment un liquide, incompatible avec le liquide dangereux à livrer, c'est-à-dire une matière dont mélange avec le liquide dangereux peut être nuisible pour l'homme et/ou pour l'environnement.

Dans un procédé selon l'invention, il est procédé à une mesure de conductivité électrique dudit liquide à transférer permettant d'identifier de façon prédictive, avant toute introduction dudit liquide à transférer dans le contenant de stockage, un risque de mélange inapproprié dudit liquide à transférer et dudit liquide de stock susceptible d'être contenu dans ledit contenant de stockage. Dans un procédé selon l'invention, il est procédé à cette mesure de conductivité électrique sans réaliser de dilution dudit liquide à transférer préalablement à cette mesure. La livraison est facilitée mais est aussi sécurisée. Dans un procédé selon l'invention, la température dudit liquide à transférer est également déterminée. Elle peut être déterminée par ajustement de cette température à une valeur de température prédéterminée -par exemple à une valeur de température de +20°C-. Elle peut être déterminée par mesure de la température dudit liquide à transférer prêt à être transféré. La valeur de conductivité électrique mesurée est comparée aux valeurs de conductivité électrique d'un intervalle prédéterminé de valeurs de conductivité électrique dudit liquide de stock à la température déterminée. Il n'est pas procédé au transfert dudit liquide à transférer dans ledit contenant de stockage lorsque la valeur de conductivité électrique mesurée n'appartient pas à cet intervalle prédéterminé. En revanche, le transfert dudit liquide à transférer dans le contenant de stockage peut être autorisé lorsque la valeur de conductivité électrique mesurée appartient à l'intervalle prédéterminé de valeurs de conductivité électrique à la température déterminée.

Dans un procédé selon l'invention, on contrôle la température dudit liquide à transférer et on réalise une mesure de sa conductivité électrique, sans procéder à aucune dilution dudit liquide à transférer préalable à la mesure lors de la livraison. Dans certains modes de réalisation selon l'invention, on utilise un capteur de mesure de conductivité électrique (CE) par induction, comprenant une première bobine parcourue par un courant électrique créant un champ magnétique dans ledit liquide à transférer et induisant dans ledit liquide un courant alternatif créateur d'un champ magnétique alternatif mesuré par une deuxième bobine de réception et utilisé pour déterminer la valeur de conductivité électrique. Un tel capteur par induction présente une enveloppe protectrice en matériau polymère, par exemple en polyméthacrylate de méthyle (PMMA), en polyétheréthercétone (PEEK), en perfluoropolymère tel qu'un polymère perfluoroalkoxy (PFA) ou polytétrafluoroéthylène (PTFE) permettant la mesure de conduction électrique, par immersion du capteur par induction dans ledit liquide à transférer sans dilution dudit liquide à transférer.

Différents modes de réalisation du procédé selon l'invention sont décrits ci-après de façon non limitative.

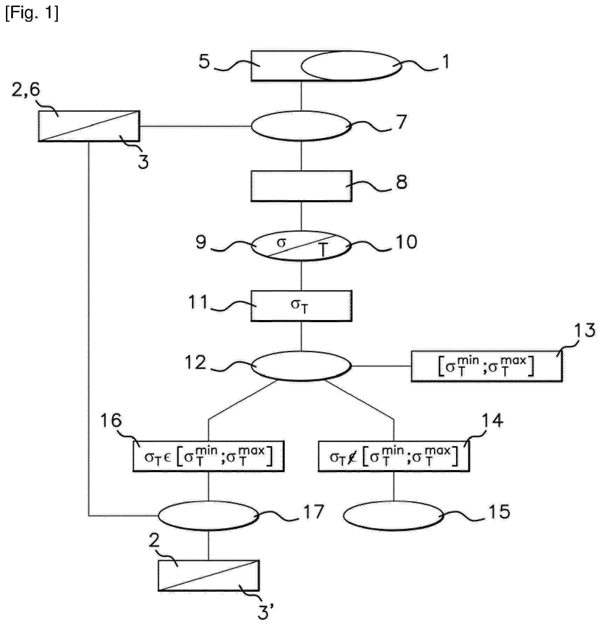

Un premier mode de réalisation d'un procédé selon l'invention, d'identification prédictive d'un risque de mélange nuisible d'un liquide, dit liquide 1 à transférer, dont un transfert 17 dans un contenant 2 de stockage est envisagé et d'un liquide, dit liquide 3 de stock, contenu dans ce contenant 2 de stockage, est représenté schématiquement en figure 1. Dans le mode de réalisation représenté, ledit liquide1 à transférer est contenu dans une citerne 5 d'un véhicule de livraison. La citerne 5 est munie d'un organe de raccordement de la citerne 5 à une installation de réception et de stockage dudit liquide 3 stock dans le contenant 2 de stockage. Dans ce mode de réalisation, il est procédé à un raccordement 7 de la citerne 5 contenant ledit liquide 1 à transférer et de l'installation 6 de réception et de stockage. Lors de ce raccordement, ledit liquide 1 à transférer ne s'écoule ni dans l'installation ni dans le contenant 2 de stockage et est maintenu dans la citerne 8 raccordée à l'installation de réception et de stockage. Dans ce premier mode de réalisation, il est procédé à une mesure 9 de conductivité électrique (σ) dudit liquide 1 à transférer contenu dans la citerne 8. Il est procédé également à une mesure 10 de la température dudit liquide 1 à transférer dont la conductivité électrique est mesurée. Les mesures 9,10 de conductivité électrique (σ) et de température (T) sont réalisées sans dilution dudit liquide 1 à transférer. Ces mesures peuvent être effectuées par tous moyens appropriés. Par exemple, la mesure 9 de conductivité électrique est réalisée au moyen d'un conductimètre à induction adapté pour permettre une mesure de la conduction électrique de liquides acides, alcalins, oxydants ou réducteurs concentrés et hautement corrosifs. Une valeur 11 de mesure de la conductivité électrique (στ) dudit liquide 1 à transférer à la température (T) de mesure est déterminée. La valeur 11 déterminée de conductivité électrique (στ) à la température (T) est comparée lors d'une étape 12 de comparaison, aux valeurs d'un intervalle 13 prédéterminé [στ^{min} ; στ^{max}] de valeurs de conductivité électrique à la température (T) mesurée. Cet intervalle 13 prédéterminé [στ^{min} ; στ^{max}] de valeurs de conductivité électrique correspond aux valeurs de conductivité électrique dudit liquide 3 de stock contenu dans le contenant 2 de stockage dans lequel le stockage dudit liquide 1 à transférer est envisagé. L'intervalle 13 prédéterminé [στ^{min} ; στ^{max}] de valeurs de conductivité électrique est représentatif de l'incertitude de mesure de la conductivité électrique, de l'incertitude de mesure de la température et de l'incertitude sur le titre dudit liquide 3 de stock. Selon certains modes de réalisation, l'intervalle 13 prédéterminé [στ^{min} ; στ^{max}] de valeurs de conductivité électrique (στ) à la température (T) de mesure peut faire partie d'une base de données contenant une pluralité d'intervalles prédéterminés de valeurs de conductivité électrique à différentes températures, par exemple à des températures comprises entre 4,8°C et 30°C. Cette base de données peut aussi comprendre des données de conductivité électrique correspondant à des liquides de stock de contenants de stockage distincts du contenant 2 de stockage dont l'approvisionnement est envisagé. Cette base de données peut être localisée et sauvegardée dans un dispositif informatique de l'installation de réception et de stockage. Il peut aussi s'agir d'une base de données distante, susceptible d'être interrogée à distance par le dispositif informatique de l'installation de réception et de stockage. Lors de l'étape 12 de comparaison, il est déterminé si la valeur de conductivité électrique dudit liquide 1 à transférer, mesurée à la température de mesure, est comprise ou non dans l'intervalle 13 prédéterminé [στ^{min} ; στ^{max}]. S'il est déterminé que la valeur de conductivité électrique dudit liquide à transférer n'est pas comprise 14 dans l'intervalle 13 prédéterminé [στ^{min} ; στ^{max}], le transfert dudit liquide 1 à transférer est refusé 15 et il n'est pas procédé à ce transfert. Le cas échéant, une alerte est donnée. Dans le cas où il est déterminé 16 que la valeur de conductivité électrique dudit liquide à transférer est comprise dans l'intervalle 13 prédéterminé [στ^{min} ; στ^{max}], le transfert dudit liquide 1 à transférer est accepté et il est procédé à une ouverture 17 d'une vanne de raccordement de la citerne 5 et du contenant 2 de stockage, de sorte que ledit liquide 1 à transférer s'écoule dans le contenant 2 de stockage et l'approvisionne en liquide 3' de stock. Le risque de survenue d'un mélange inapproprié, voire nuisible, dudit liquide à transférer et dudit liquide 3 de stock dans le contenant de stockage est limité, voire supprimé.

Dans ce premier mode de réalisation et dans la variante de ce premier mode de réalisation ci-dessous, la conductivité électrique (σ) et la température dudit liquide à transférer sont mesurées dans une chambre d'analyse formée dans un conduit de raccordement du contenant 2 de stockage à la citerne 5 du véhicule 4 de livraison. La chambre d'analyse s'étend immédiatement à l'aval -par rapport au sens d'écoulement dudit liquide à transférer, à partir de la citerne 5 et vers le contenant 2 de stockage- du point de raccordement du contenant 2 de stockage à la citerne 5 d'un véhicule 4 de livraison.

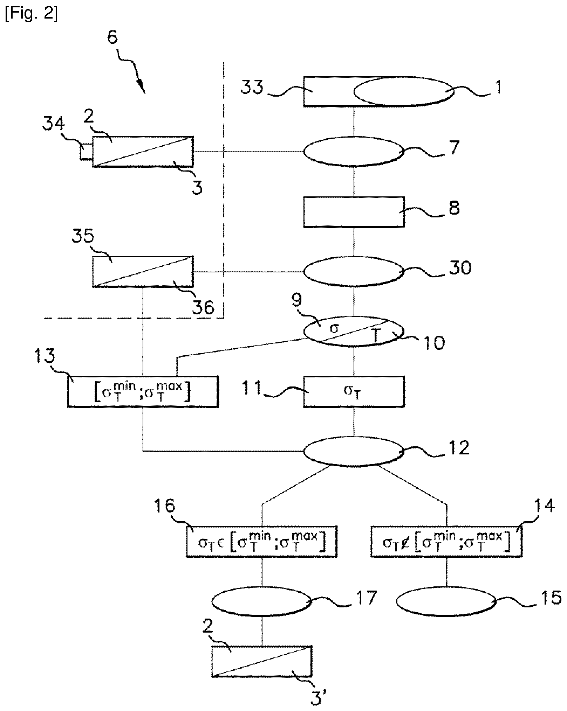

Une variante du premier mode de réalisation d'un procédé selon l'invention, d'identification prédictive d'un risque de mélange nuisible d'un liquide, dit liquide 1 à transférer, dont un transfert 17 dans un contenant 2 de stockage est envisagé et d'un liquide, dit liquide 3 de stock, contenu dans ce contenant 2 de stockage, est représenté schématiquement en figure 2. Dans cette variante, une livraison dudit liquide 1 à transférer est requise sur un site 6 de livraison, ledit liquide 1 à transférer étant l'un des liquides à transférer d'une pluralité de liquides à transférer distincts. Ledit liquide 1 à transférer dont la livraison est demandée est contenu dans une citerne 33 d'une pluralité de citernes d'un véhicule de transport et de livraison. Cette variante illustrée d'un procédé selon l'invention est un procédé, dit procédé embarqué, pour lequel les éléments nécessaires à la mise en oeuvre du procédé -notamment un dispositif 38 d'analyse de conductivité, un dispositif 41 de mesure de température, un dispositif 39 informatique de contrôle du transfert, une pompe 40 de refoulement dudit liquide à transférer et un lecteur 35 d'identifiant d'un contenant 2 de stockage- sont embarqués sur le véhicule de transport et de livraison. Dans cette variante d'un procédé selon l'invention, il est procédé à une étape 7 de raccordement de la citerne 33 du véhicule de livraison et du contenant 2 de stockage dudit liquide 3 de stock, dans lequel le transfert dudit liquide 1 à transférer est envisagé. On forme une citerne 33 raccordée au contenant 2 de stockage, mais sans communication de liquide entre la citerne 33 et le contenant 2 de stockage. Lors de cette étape 7 de raccordement, il est procédé à une lecture 30 d'un identifiant 34 du contenant 2 de stockage, au moyen d'un lecteur d'identifiant. L'identifiant 34 peut être un identifiant du type code-barre ou code matriciel, notamment un code QR. L'identifiant 34 peut aussi être un composant électronique apte à transmettre des données par radiofréquence -notamment des microcircuits ou étiquettes RFID- ou par hautes fréquences -notamment un périphérique NFC (« *Near-Field Communication »).* La lecture 30 de l'identifiant 34 est effectuée par un lecteur 35 d'identifiant adapté pour pouvoir lire les données de l'identifiant 34 et pour faire correspondre à cet identifiant 34 des données 36 d'identification du réceptacle 2 de stockage et dudit liquide 3 de stock. Le lecteur 35 d'identifiant peut être un lecteur de code-barre, un lecteur de code-QR ou un lecteur apte à recevoir des données par radiofréquence -notamment d'un lecteur RFID-. Le lecteur 35 d'identifiant de l'identifiant 34 peut aussi être un lecteur apte à recevoir des données par hautes fréquences -notamment un périphérique NFC (« *Near-Field Communication* »)*.* Les données 36 d'identification du contenant 2 de stockage peuvent être de tous types. Il peut s'agir de données 36 d'identification du client, de données d'identification du contenant de stockage par géolocalisation, de données d'identification dudit liquide 3 de stock, contenu dans le contenant 2, de sa nature chimique, de sa concentration. Il peut avantageusement s'agir de données relatives à la conductivité électrique dudit liquide 3 de stock à la température de mesure, notamment de données relatives à la variation de la conductivité électrique dudit liquide 3 de stock avec la température. Avantageusement, les données 36 d'identification comprennent un intervalle [στ^{min} ; στ^{max}] de valeurs de conductivité électrique représentatives, aux incertitudes près, de la valeur de conductivité électrique à la température mesurée dudit liquide 3 de stock contenu dans le contenant 2 de stockage.

Dans la variante d'un procédé selon l'invention représentée schématiquement en figure 2, il est procédé à une mesure 9 de la conductivité électrique et à une mesure 10 de la température dudit liquide 1 à transférer contenu dans la citerne 33, sans dilution dudit liquide 1 à transférer. De telles mesures 9,10 peuvent être effectuées dans la citerne 33 ou en sortie de la citerne 33, notamment dans une chambre de mesure disposée sur une conduite de raccordement de la citerne 33 et du contenant 2 de stockage. De telles mesures sont en particulier effectuées en amont d'une pompe de refoulement, c'est-à-dire dans la chambre de mesure interposée entre la citerne 33 et la pompe de refoulement. La valeur 11 de conductivité électrique (στ) mesurée à la température de mesure est transmise au dispositif 39 informatique de contrôle qui procède à une comparaison 12 de cette valeur de conductivité électrique (στ) dudit liquide 1 à transférer et des valeurs de conductivité électrique à la température mesurée d'un intervalle [στ^{min} ; στ^{max}] de valeurs 13 de conductivité électrique représentatives, aux incertitudes près, de la valeur de conductivité électrique à la température mesurée dudit liquide 3 de stock contenu dans le contenant 2 de stockage. Selon un premier cas 16 de figure, si la valeur de conductivité électrique (στ) dudit liquide 1 à transférer est comprise dans cet intervalle [στ^{min} ; στ^{max}] 13, il est procédé à la mise en fonctionnement 17 de la pompe 40 de refoulement et au transfert dudit liquide 1 à transférer dans le contenant 2 de stockage dudit liquide de stock 3'. Selon un deuxième cas 14 de figure, si la valeur de conductivité électrique (στ) dudit liquide 1 à transférer n'est pas comprise dans cet intervalle [στ^{min} ; στ^{max}], le transfert dudit liquide 1 à transférer est refusé 15 et il n'est pas procédé ni à la mise en fonctionnement de la pompe de refoulement ni au transfert dudit liquide 1 à transférer dans le contenant 2 de stockage. Cette variante du premier mode de réalisation d'un procédé selon l'invention permet de prévenir le mélange nuisible d'un liquide 1 à transférer contenu dans l'une des citernes du véhicule de livraison et ne correspondant pas audit liquide 3 de stock contenu dans le contenant 2 de stockage.

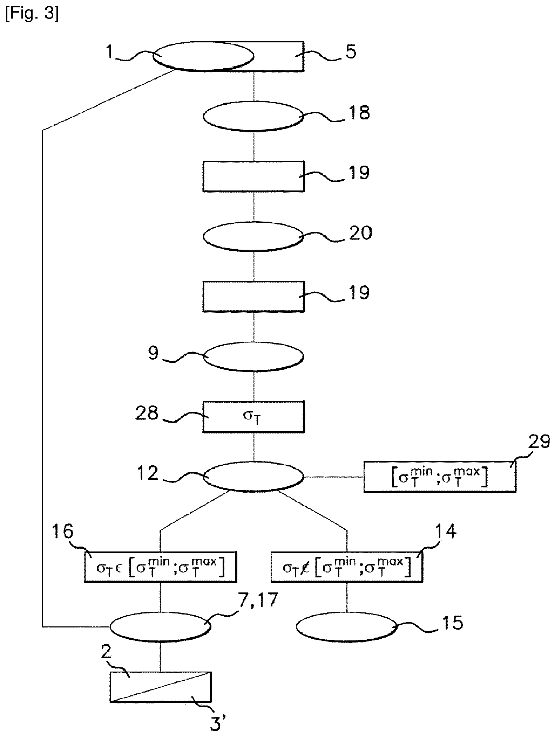

Un deuxième mode de réalisation d'un procédé selon l'invention, d'identification prédictive d'un risque de mélange nuisible d'un liquide, dit liquide 1 à transférer, dont un transfert 17 dans un contenant 2 de stockage est envisagé et d'un liquide, dit liquide 3 de stock, contenu dans ce contenant 2 de stockage, est représenté schématiquement en figure 3. Dans ce deuxième mode de réalisation représenté, ledit liquide1 à transférer est contenu dans une citerne 5 d'un véhicule automobile de livraison, munie d'une vanne de raccordement de la citerne 5 à une installation de réception et de stockage dudit liquide 3 stock, comprenant le contenant 2 de stockage. Dans ce deuxième mode de réalisation représenté, il n'est pas procédé à ce stade à un raccordement de la citerne 5 contenant ledit liquide 1 à transférer à l'installation de réception et de stockage. Dans ce deuxième mode de réalisation représenté, il est procédé avant tout raccordement, à un prélèvement 18 d'un échantillon 19 représentatif dudit liquide 1 à transférer aux fins de l'analyse de sa conductivité électrique. En particulier, cette analyse de conductivité électrique de l'échantillon 19 représentatif est réalisée à distance de la citerne 5 du véhicule de livraison, notamment en laboratoire. Dans ce mode de réalisation, on ajuste 20 la température de l'échantillon 19 dudit liquide 1 à transférer à une température, dite température de référence, de l'ordre de 20°C. On réalise cette étape 20 d'ajustement de la température de l'échantillon dudit liquide 1 à transférer par tout moyen. Avantageusement, on mesure en continu la température de l'échantillon 19 jusqu'à atteindre ladite température de référence. Lorsque l'échantillon 19' a atteint ladite température de référence, il est procédé à une mesure 9 de la conductivité électrique (σ) de l'échantillon 19' à ladite température de référence. L'ajustement 20 de la température et la mesure 9 de conductivité électrique sont réalisées sans dilution de l'échantillon 19' dudit liquide 1 à transférer. Ces mesures peuvent être effectuées par tous moyens appropriés, comme décrit dans le premier mode de réalisation. Une valeur 28 de mesure de la conductivité électrique (σ_{réf}) dudit liquide 1 à transférer à ladite température (T_{réf}) de référence est ainsi déterminée. La valeur 28 ainsi déterminée est comparée lors d'une étape 12 de comparaison, aux valeurs d'un intervalle 29 prédéterminé [στ^{min} ; στ^{max}] de valeurs de conductivité électrique à la température (T_{réf}) de référence, dudit liquide 3 de stock contenu dans le contenant 2 de stockage dans lequel le stockage dudit liquide 1 à transférer est envisagé. L'intervalle 29 prédéterminé [στ^{min}; στ^{max}] de valeurs de conductivité électrique est représentatif de l'incertitude de mesure de la conductivité électrique, de l'incertitude de mesure de la température, de l'incertitude sur le titre (la concentration) dudit liquide 3 de stock. Selon certains modes de réalisation non représentés, l'intervalle 29 prédéterminé de valeurs de conductivité électrique (σ_{réf}) à la température (T_{réf}) de référence dudit liquide 1 à transférer peut faire partie d'une base de données contenant une pluralité d'intervalles prédéterminés de valeurs de conductivité électrique à ladite température de référence correspondant à des liquides de stock de contenants de stockage distincts du contenant 2 de stockage dont l'approvisionnement est envisagé. Cette base de données peut être localisée et sauvegardée dans un dispositif informatique de l'installation de réception et de stockage. Il peut aussi s'agir d'une base de données distante, susceptible d'être interrogée à distance par le dispositif informatique de l'installation de réception et de stockage. Lors de l'étape 12 de comparaison, il est déterminé si la valeur de conductivité électrique dudit liquide 1 à transférer à ladite température de référence, est comprise ou non dans l'intervalle 29 prédéterminé [στ^{min} ; στ^{max}]. Dans le cas où il est déterminé 14 que la valeur de conductivité électrique dudit liquide à transférer n'est pas comprise dans l'intervalle 29 prédéterminé, le transfert dudit liquide 1 à transférer est refusé 15 et il n'est pas procédé à ce transfert. Dans le cas où il est déterminé 17 que la valeur de conductivité électrique dudit liquide à transférer est comprise dans l'intervalle 29 prédéterminé, le transfert dudit liquide 1 à transférer est accepté et il est procédé à un raccordement 7 de la citerne 5 contenant ledit liquide 1 à transférer à l'installation de réception et de stockage et à une ouverture d'une vanne interposée entre la citerne et l'installation de réception et de stockage, mettant la citerne 8 en communication du contenant 2 de stockage et permettant un réapprovisionnement du contenant 2 de stockage en liquide 3' de stock. Le risque de mélange nuisible de liquides incompatibles est diminué.

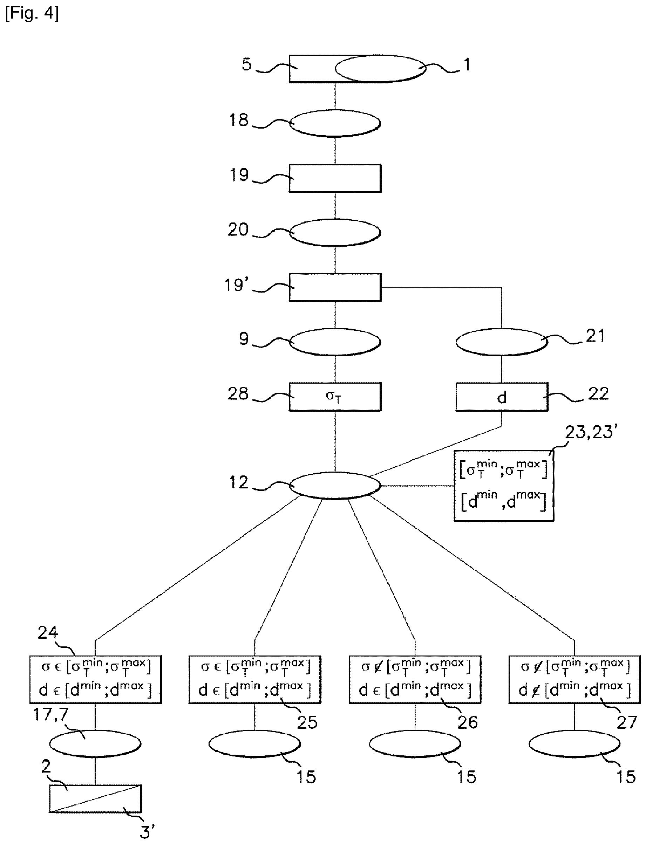

Une variante du deuxième mode de réalisation du procédé selon l'invention, d'identification prédictive d'un risque de mélange nuisible d'un liquide, dit liquide 1 à transférer, dont un transfert 17 dans un contenant 2 de stockage est envisagé et d'un liquide, dit liquide 3 de stock, contenu dans ce contenant 2 de stockage, est représenté schématiquement en figure 4. Dans cette variante représentée, ledit liquide1 à transférer est contenu dans une citerne 5 d'un véhicule de livraison, munie d'une vanne de raccordement de la citerne 5 à une installation de réception et de stockage dudit liquide 3 stock, comprenant le contenant 2 de stockage. Dans cette variante représentée, il n'est pas procédé à ce stade à un raccordement de la citerne 5 contenant ledit liquide 1 à transférer à l'installation de réception et de stockage. Dans cette variante représentée, il est procédé avant tout raccordement, à un prélèvement 18 d'un échantillon 19 représentatif dudit liquide 1 à transférer aux fins de la mesure de sa conductivité électrique et de sa densité. On réalise ces mesures à distance de la citerne 5 du véhicule de livraison, notamment en laboratoire. Dans cette variante, on ajuste 20 la température de l'échantillon 19 dudit liquide 1 à transférer à une température, dite température de référence, comprise entre +4,8°C et +30°C, par exemple de l'ordre de 20°C, préalablement à toute mesure. Cette étape 20 d'ajustement de la température de l'échantillon 19 dudit liquide 1 à transférer est réalisée par tout moyen. Avantageusement, on mesure en continu la température de l'échantillon 19 jusqu'à atteindre ladite température de référence. Lorsque l'échantillon 19' a atteint ladite température de référence, il est procédé à une mesure 9 de la conductivité électrique (σ) de l'échantillon 19' dudit liquide 1 à transférer à ladite température de référence. Il est également procédé à une mesure 21 de la densité (d) et/ou de la masse volumique de l'échantillon 19' dudit liquide 1 à transférer à ladite température de référence. On réalise une telle mesure de masse volumique par toute méthode connue de pesée d'un volume connu dudit liquide 1 à transférer. Une telle mesure 21 de densité et/ou de masse volumique est indicatrice du titre dudit liquide 1 à transférer. L'ajustement 20 de la température et les mesures 9, 21 de conductivité électrique et de densité sont réalisées sans dilution de l'échantillon 19, 19' dudit liquide 1 à transférer. Ces mesures peuvent être effectuées par tous moyens appropriés, comme décrit dans le premier mode de réalisation. Une valeur 28 de mesure de la conductivité électrique (στ) et une valeur 22 de densité et/ou de masse volumique (d) dudit liquide 1 à transférer à ladite température (T_{réf}) de référence sont ainsi déterminées. Ces valeurs sont transmises à un automate de sécurité sans intervention humaine ni interférence possible sur le(s) résultat(s) de ces mesures. Par exemple, Ces valeurs sont transmises à un tel automate de sécurité, notamment à un automate SIL (« *Safety Integrity Level* »), adapté pour pouvoir recevoir les valeurs (στ, d) mesurées, pour pouvoir comparer lors d'une étape 12 de comparaison, les valeurs 22, 28 mesurées aux valeurs d'intervalles 23, 23' prédéterminés de valeurs de conductivité électrique à la température (T_{réf}) de référence et de masse volumique dudit liquide 3 de stock contenu dans le contenant 2 de stockage dans lequel le stockage dudit liquide 1 à transférer est envisagé, et pour pouvoir commander selon les résultats de cette comparaison l'ouverture ou non d'une vanne de distribution dudit liquide 1 à transférer dans le contenant 2 de stockage correspondant. Selon certains modes de réalisation non représentés, les intervalles 23,23' prédéterminés de valeurs de conductivité électrique et de masse volumique à la température (T_{réf}) de référence dudit liquide 3 de stock peuvent faire partie d'une base de données contenant une pluralité d'intervalles prédéterminés de valeurs de conductivité électrique et de masse volumique à ladite température de référence correspondant à des liquides 3 de stock de contenants de stockage distincts du contenant 2 de stockage dont l'approvisionnement est envisagé. Cette base de données peut être localisée et sauvegardée dans un dispositif informatique de l'installation de réception et de stockage. Il peut aussi s'agir d'une base de données distante, susceptible d'être interrogée à distance par le dispositif informatique de l'installation de réception et de stockage. Lors de l'étape 12 de comparaison, il est déterminé si les valeurs de conductivité électrique et de masse volumique dudit liquide 1 à transférer à ladite température de référence, sont comprises ou non dans les intervalles 23, 23' prédéterminés correspondants. Dans le cas où il est déterminé 25, 26, 27 qu'au moins l'une des valeurs de conductivité électrique et de masse volumique dudit liquide à transférer n'est pas comprise dans l'intervalle 23, 23' prédéterminé correspondant, le transfert dudit liquide 1 à transférer est refusé 15 et il n'est pas procédé à ce transfert. Dans le cas où il est déterminé 17 que la valeur de conductivité électrique et de masse volumique dudit liquide à transférer sont chacune comprises dans l'intervalle 23, 23' prédéterminé correspondant, le transfert dudit liquide 1 à transférer est accepté et il est procédé à un raccordement 7 de la citerne 5 contenant ledit liquide 1 à transférer à l'installation de réception et de stockage et à une ouverture d'une vanne de raccordement de la citerne raccordée à l'installation de réception et de stockage, mettant la citerne en communication du contenant 2 de stockage et permettant un réapprovisionnement du contenant 2 de stockage en liquide 3' de stock. Le risque de mélange nuisible de liquides incompatibles est diminué.

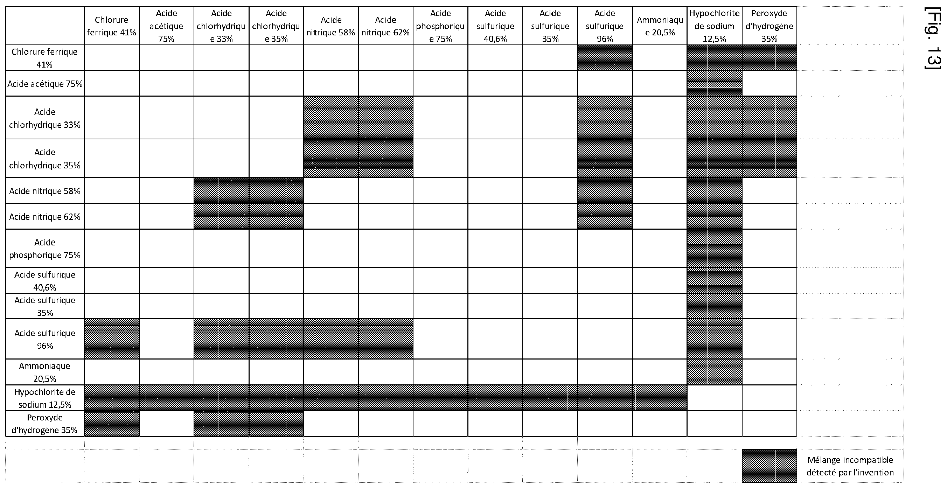

L'invention permet ainsi de distinguer des liquides incompatibles les uns avec les autres, la figure 13 donne un exemple d'une matrice d'incompatibilité dans laquelle les incompatibilités entre deux liquides sont représentées par une case hachurée. Cette matrice a été établie par les inventeurs en se basant sur le comportement observé de ces liquides lorsqu'ils sont mélangés. Dans cet exemple, toutes les incompatibilités qui sont représentées sont parfaitement distinguées par la comparaison de la conductivité mesurée du liquide à transférer par rapport à un intervalle de conductivités correspondant au liquide de stock à la température déterminée.

La matrice de la figure 13 correspond à des incompatibilités que le procédé d'identification prédictive est capable de détecter.

Le tableau 1 ci-dessous illustre un exemple dans lequel la distinction entre deux liquides incompatibles, ici, l'hypochlorite de sodium entre 9 et 16 % de pourcentage massique et l'acide sulfurique entre 95 et 98 % de pourcentage massique, par une comparaison de la conductivité électrique mesurée par rapport à l'intervalle conductivité du liquide de stock à la température déterminée. Les intervalles de conductivité électrique ne se recouvrant pas, le procédé permet de distinguer ces deux liquides.

En particulier, le tableau 1 montre qu'à 10°C la différence entre la plage haute de l'intervalle de conductivité électrique de l'acide sulfurique et la plage basse de l'intervalle de conductivité électrique de l'hypochlorite de sodium est d'environ 17 mS/cm.

A 20°C la différence entre la plage haute de l'intervalle de conductivité électrique de l'acide sulfurique et la plage basse de l'intervalle de conductivité électrique de l'hypochlorite de sodium est d'environ 19 mS/cm.

**[Tableau 1]**

| Nature du liquide et proportion massique en pourcentage | Plage de conductivité à 10°C en mS/cm | Plage de conductivité à 20°C en mS/cm |
|---|---|---|
| Hypochlorite de sodium 9-16% | 97,647 - 120,054 | 128,431 - 157,080 |
| Acide sulfurique 95-98% | 54,376 - 80,598 | 73,392 - 109,080 |

En outre, les inventeurs ont constaté de manière surprenante que les intervalles de conductivités prédéterminés de certains liquides incompatibles entre eux peuvent présenter à une température déterminée (Tréf), des intervalles de conductivités électriques [σTmin ; σTmax] qui se recoupent.

Par exemple, lorsqu'ils sont mis en contacts l'un de l'autre, le chlorite de sodium et l'acide sulfurique forment du dioxyde de chlore qui est connu comme étant un gaz extrêmement explosif. Il est par conséquent primordial de pouvoir réduire le risque d'opérer un mélange de ces deux liquides.

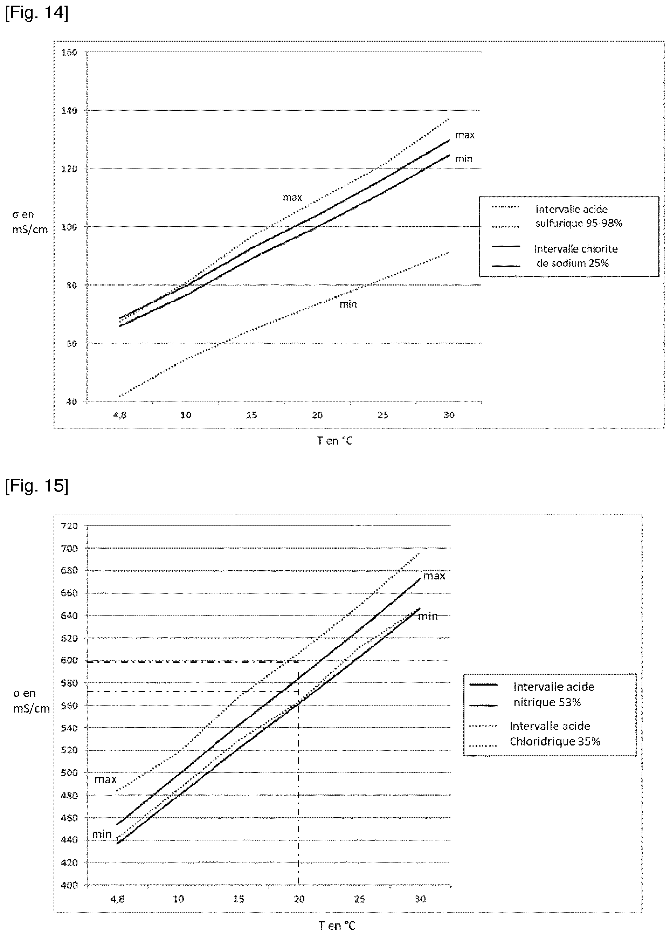

Toutefois, les inventeurs se sont aperçus que les intervalles de conductivités électriques de ces deux liquides se recoupaient au moins en partie notamment à une température de référence de 4,8°C. En effet, comme illustré à la figure 14, à cette température de référence, le chlorite de sodium à 25% et l'acide sulfurique 96%-98% présentent respectivement des intervalles de conductivités électriques de 65,784 mS/cm à 68,442 mS/cm et 41,835 mS/cm à 67,367 mS/cm. Ces intervalles se recoupent sur entre 65,784 mS/cm et 67,367 mS/cm. Dans ce cas précis, si une conductivité électrique autour 66 mS/cm +/-1 est mesurée, un doute existe quant à la nature du liquide pour lequel l'on vient de mesurer la conductivité électrique à une température de 4,8 °C. En effet, cette valeur rentre à la fois dans l'intervalle de conductivité du chlorite de sodium 25% et de l'acide sulfurique 95-98%.

En particulier, la figure 14, illustre les valeurs maximale et minimale des intervalles de conductivités électriques de l'acide sulfurique 95-98% et du chlorite de sodium 25%. Les courbes maximales des deux intervalles sont annotées par la mention « max » alors que les courbes minimales sont annotées par la mention « min ». Ces courbes peuvent être générées à l'aide d'une quantité de mesures expérimentales déterminées qui sont ensuite traitées par une fonction de régression linéaire. Plus largement, la lecture du graphique de la figure 14 permet de constater que l'intervalle du chlorite de sodium 35% se trouve, quasi en totalité, dans les valeurs hautes (proche de la courbe max de l'acide sulfurique) de l'intervalle de l'acide sulfurique 95-98%. Il est par conséquent primordial de pouvoir détecter lorsqu'il y a un risque que le liquide à transférer corresponde en réalité, non pas au liquide de stock mais au liquide qui est incompatible avec le liquide de stock.

La figure 15 donne un autre exemple, dans lequel, les inventeurs ont observé un recouvrement des intervalles de conductivité électrique de deux liquides incompatibles entre eux, en l'occurrence, l'acide nitrique à environ 53% de pourcentage massique et l'acide chlorhydrique à environ 35% de pourcentage massique. La figure 15 présente les annotations « min » et « max » pour les mêmes raisons que celles de la figure 14.

Dans ce contexte et dans l'objectif d'obvier certains cas particuliers qui peuvent être qualifiés de faux positifs, dans lesquels, à la température déterminée (Tréf), la conductivité électrique du liquide à transférer correspond, d'une part, à l'intervalle de conductivité électrique du liquide de stock, et d'autre part, à un intervalle de conductivités électriques d'un liquide avec lequel le liquide de stock est incompatible, les inventeurs ont construit une base de données répertoriant des intervalles de conductivités électriques relatifs à des liquides incompatibles entre eux, en fonction de la température de référence (Tréf) à laquelle la conductivité électrique est mesurée. Cette base de données d'incompatibilité des liquides peut répertorier, notamment, des solutions aqueuses basiques et acides de différentes natures qui sont susceptibles de constituer un mélange inapproprié.

Selon ce mode de réalisation, le procédé d'identification prédictive comporte deux critères de discrimination pour définir si le liquide à transférer peut-être transférer vers la cuve qui contient le liquide de stock. En particulier, le procédé d'identification comprend en plus de l'étape 12 comprend une étape de comparaison de la conductivité électrique mesurée du liquide 1 à transférer avec une base de données d'intervalles de conductivités électriques [στ^{min} ; στ^{max}] prédéfinis à la température déterminée (T_{réf}) et qui correspondent à des liquides qui présentent un risque de mélange inapproprié avec le liquide de stock. Selon ce mode de réalisation, si la conductivité électrique mesurée correspond au moins en partie à l'un desdits intervalles, il n'est pas procédé au transfert du liquide de transfert 1. Selon ce mode de réalisation, dans le cas précité du chlorite de sodium et de l'acide sulfurique, à une température de référence de 4, 8°C si le liquide de stock correspond à l'acide sulfurique et que l'on mesure une conductivité électrique comprise entre 65,784 mS/cm et 67,367 mS/cm qui correspond à la plage selon laquelle les deux intervalles de conductivité se recoupent, l'étape 12 de comparaison indique qu'il est probable que le liquide à transférer soit bien de l'acide sulfurique. Néanmoins, la deuxième étape de comparaison de la conductivité mesurée, avec la base de données de mélanges inappropriés, indique qu'il est probable que le liquide à transférer soit du chlorite de sodium. En pareille situation, le transfert du liquide à transférer est annulé car, selon ce mode de réalisation, la probabilité que le liquide à transférer et le liquide de stock soient finalement deux liquides incompatibles, selon ce mode de réalisation, est trop importante.

Si l'on reprend l'exemple de la figure 15, alors que le liquide de stock est de l'acide chloridrique à 35% de pourcentage massique et alors que la température a été déterminée de 20°C, si l'on mesure une conductivité électrique comprise entre 560 mS/cm et 580 mS/cm, la première étape 12 de comparaison entre la conductivité mesurée du liquide à transférer et l'intervalle de conductivité attendu de l'acide chloridrique à 20°C, va être positive dans le sens où à 20°C l'intervalle de conductivité électrique de l'acide chloridrique qui est d'environ 560 mS/cm à 605 mS/cm. Toutefois, le graphique de la figure 15 montre qu'à 20°C, une mesure comprise entre 560 mS/cm et 580 mS/cm est également susceptible de correspondre à l'acide nitrique 53%. Dans ce cas de figure, le transfert du liquide à transférer est annulé car la probabilité que le liquide à transférer soit de l'acide nitrique 53% et non de l'acide chloridrique 35% est importante. A l'inverse, une mesure de conductivité électrique comprise entre 590 et 605 mS/cm à 20°C permet de définir clairement que le liquide de stock est de l'acide chloridrique 35% et non de l'acide nitrique 53%, car une telle mesure entre dans l'intervalle de conductivité électrique de l'acide chloridrique 35% qui ne se recoupe pas avec l'intervalle de conductivité de l'acide nitrique 53%.

La deuxième étape de comparaison, vise ainsi à déterminer, si la conductivité électrique mesurée du liquide à transférer est susceptible de correspondre à un intervalle de conductivité électrique d'un liquide qui est incompatible avec le liquide de stock et dont l'intervalle de conductivité électrique se recoupe avec l'intervalle de conductivité électrique du liquide de stock.

Avantageusement, cela permet d'obvier des cas particuliers précédemment désignés comme faux positif, dans lesquels, à la température déterminée, le liquide à transférer correspond, d'une part, au moins en partie à l'intervalle de conductivité électrique du liquide de stock, et d'autre part, au moins en partie à un intervalle de conductivités électriques défini par la base de données des mélanges inappropriés comme correspondant à un liquide pour lequel le mélange avec le liquide de stock est inapproprié et susceptible de générer une réaction dangereuse.

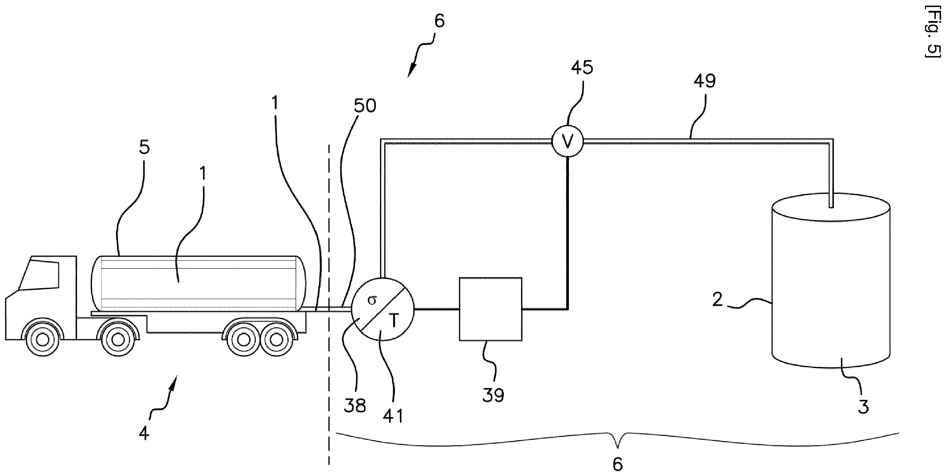

Une illustration schématique d'une installation s'étendant sur un site 6 de livraison, recevant un véhicule 4 de transport et de livraison dudit liquide 1 à transférer est représentée en figure 5. L'installation de la figure 5 permet notamment la mise en oeuvre du premier mode de réalisation d'un procédé selon l'invention tel qu'illustré en figure 1. L'installation comprend au moins un contenant 2 de stockage d'un liquide 3 de stock. Le contenant 2 de stockage est conçu et dimensionné pour pouvoir recevoir une quantité appropriée dudit liquide 3 de stock. Le(s) matériau(x) formant le contenant est(sont) adaptés pour pouvoir être maintenus en contact avec des liquides corrosifs, notamment en contact avec des solutions concentrées d'acides -en particulier d'acides forts-, avec des solutions alcalines ou avec des oxydants. De façon générale, chaque contenant 2 de stockage est destiné à contenir un unique liquide 3 de stock. Il est donc essentiel de pouvoir écarter le risque de mélanger dans le contenant 2 de stockage, ledit liquide 3 de stock contenu dans le contenant 2 et un liquide 1 à transférer, de nature (composition, concentration) distincte dudit liquide 3 de stock. L'installation comprend une conduite 49 de raccordement du contenant 2 de stockage à la citerne 5 d'un véhicule 4 de transport et de livraison. La conduite 49 présente à son extrémité amont (selon le sens de transfert dudit liquide 1 à transférer, à partir de la citerne 5 vers le contenant 2 de stockage) un raccord 50 de la conduite 49 à une vanne amont de déchargement (non représentée) de la citerne 5. S'étendant en aval du raccord 50, la conduite 49 forme une chambre de mesure accommodant un dispositif 38 de mesure de la conductivité électrique dudit liquide 1 à transférer présent dans le raccord 50 et un dispositif 41 de mesure de la température dudit liquide 1 à transférer. La conduite 49 présente une vanne 45 d'ouverture/fermeture de la conduite 49 adaptée pour permettre, dans un premier état fermé de la vanne 45, que dudit liquide 1 à transférer remplisse la chambre de mesure mais ne s'écoule pas dans le contenant 2 de stockage et dans un deuxième état ouvert de la vanne 45, que dudit liquide 1 à transférer s'écoule dans le contenant 2 de stockage. Le dispositif 38 de mesure de la conductivité électrique et le dispositif 41 de mesure de la température sont connectés à un dispositif 39 informatique de réception des données de mesure de conductivité électrique à ladite température de mesure et d'analyse comparative de la valeur mesurée de conductivité électrique à la température de mesure et d'un intervalle prédéterminé des valeurs de conductivité électrique à la température de mesure, dudit liquide 3 de stock contenu dans le contenant 2. Lorsque la valeur mesurée de conductivité électrique à la température de mesure correspond à l'une des valeurs de cet intervalle, le dispositif 39 informatique transmet à la vanne 45 d'ouverture/fermeture de la conduite 49, une instruction de passer dans le deuxième état ouvert de la vanne 45, permettant un transfert dudit liquide 1 à transférer, de la citerne 5 dans le contenant 2 de stockage, sans procurer d'effet nuisible pour l'homme et/ou pour l'environnement. Bien entendu, rien n'empêche de prévoir que la conduite 49 soit équipée d'une pompe de refoulement dudit liquide 1 à transférer vers le contenant 2 de stockage. Rien n'empêche de prévoir que la vanne 45 d'ouverture/fermeture soit elle-même la pompe de refoulement.

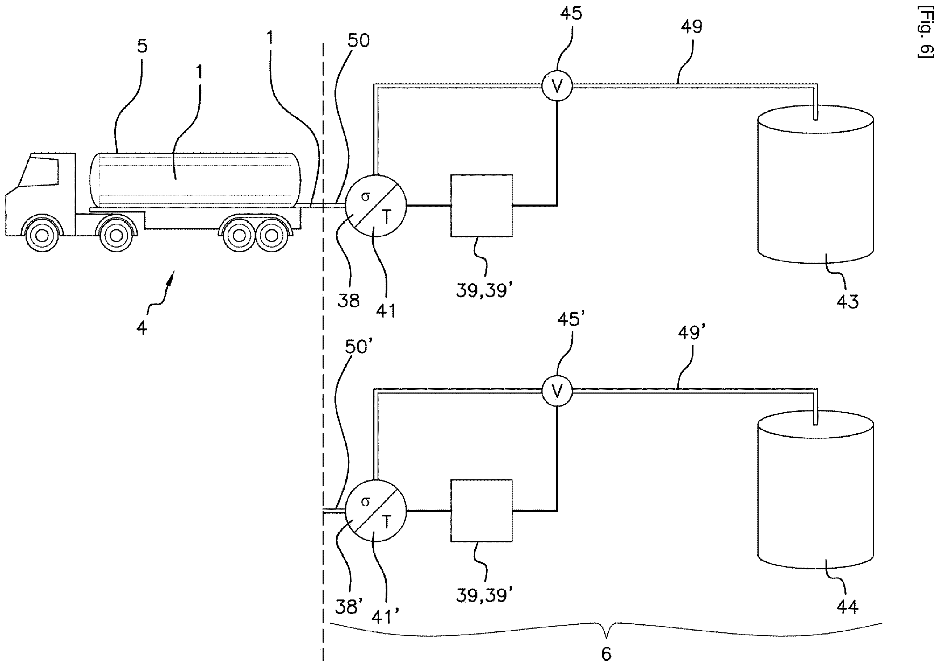

Une illustration schématique d'une variante de l'installation de la figure 5 est représentée en figure 6. Dans cette variante, l'installation comprend deux contenants 43,44 de stockage de deux liquides de stock distincts. Les contenants 43,44 de stockage sont conçus et dimensionnés pour pouvoir recevoir chacun une quantité appropriée d'un unique liquide de stock. Dans cette variante représentée en figure 6, le contenant 43 de stockage est pourvu d'une conduite 49 de remplissage, adaptée pour pouvoir être raccordée par un raccord 50 à la citerne 5 d'un véhicule 4 de transport et de livraison. La conduite 49 est munie d'une vanne 45, d'un dispositif 38 d'analyse de conductivité et d'un dispositif 41 de mesure de température. Les dispositifs 38 d'analyse de conductivité et 41 de mesure de température sont reliés à un dispositif 39 de contrôle et de pilotage de la vanne 45. Parallèlement, le contenant 44 de stockage est pourvu d'une conduite 49' de remplissage adaptée pour pouvoir être raccordée par un raccord 50' au véhicule 4 de transport et de livraison, la conduite 49' étant munie d'une vanne 45', d'un dispositif 38' d'analyse de conductivité et d'un dispositif 41' de mesure de température. Les dispositifs 38' d'analyse de conductivité et 41' de mesure de température sont reliés à un dispositif 39' de contrôle et de pilotage de la vanne 45', distinct ou confondu avec le dispositif 39 de contrôle. À son arrivée sur le site 6 de livraison, il est procédé au raccordement de la citerne 5 du véhicule 4 de livraison à l'un des raccords 50,50' des conduites 49,49' de remplissage correspondant aux données administratives relatives à la livraison du liquide 1 à transférer. Dans l'installation représentée en figure 6, le véhicule 4 de livraison est raccordé à la conduite 49 de remplissage communiquant avec le contenant 43 de stockage.

Cela étant, rien n'empêche de prévoir une conduite 49 de remplissage unique munie d'un raccord 50 unique, de dispositifs 38 d'analyse de conductivité et 41 de mesure de température uniques et d'une vanne trois voies adaptée pour permettre que :
- dans un premier état de la vanne trois voies, dudit liquide 1 à transférer remplisse la chambre de mesure mais ne s'écoule dans aucun des contenants 43,44 de stockage,
- dans un deuxième état de la vanne trois voies, dudit liquide 1 à transférer puisse s'écouler dans l'un seulement des contenants 43,44 de stockage, et
- dans un troisième état de la vanne 46 trois voies, dudit liquide 1 à transférer puisse s'écouler dans l'autre seulement des contenants 43,44 de stockage.
Bien entendu, dans ce mode de réalisation, il convient de prévoir une purge et un rinçage de la conduite 49 de remplissage entre deux livraisons.

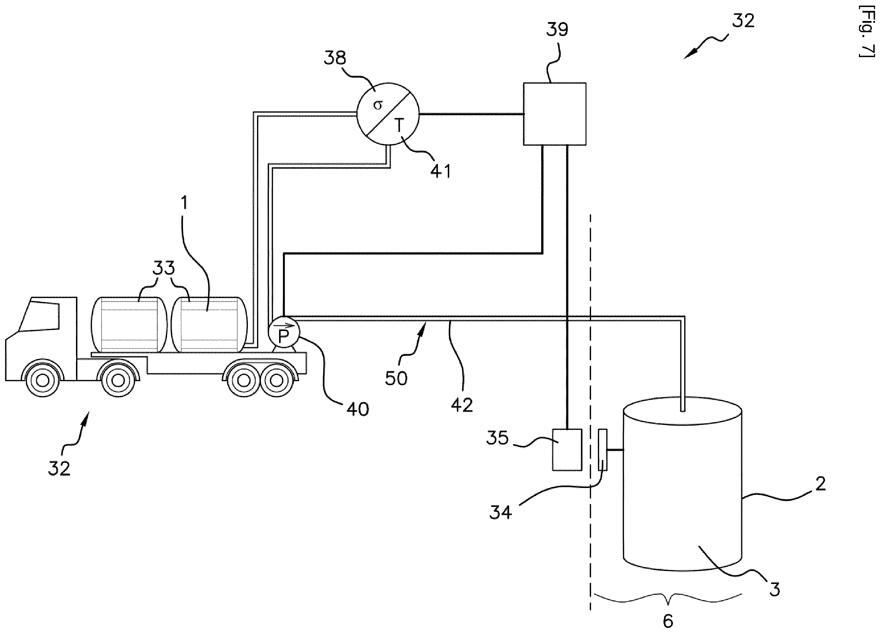

Une illustration schématique d'une installation 6 recevant un véhicule 4 de transport et de livraison dudit liquide 1 à transférer est représentée en figure 7. L'installation de la figure 7 permet la mise en oeuvre d'un procédé selon l'invention dont un logigramme est représenté en figure 2. Dans ce mode de réalisation, les éléments nécessaires pour la mise en oeuvre du procédé, notamment le dispositif 38 d'analyse de conductivité, le dispositif 41 de mesure de température, le dispositif 39 informatique de contrôle du transfert, la pompe 40 de refoulement dudit liquide à transférer et le lecteur 35 d'un identifiant 34 du contenant 2 de stockage sont embarqués sur le véhicule 32 de transport et de livraison. Dans ce mode de réalisation, le véhicule 32 de transport et de livraison est muni d'une pluralité de citernes 33. Le véhicule 32 de transport est ainsi autonome pour procéder à une livraison sécurisée dudit liquide 1 à transférer dans le contenant 2 de stockage dudit liquide 3 de stock. Dans ce mode de réalisation, le contenant 2 de stockage disposé sur le site 6 de livraison est muni d'un identifiant 34 adapté pour pouvoir être lu par le lecteur 35 d'identifiant porté par le véhicule 32 de transport et de livraison. L'identifiant 34 peut être un identifiant du type code-barre ou code matriciel, notamment un code QR. L'identifiant 34 peut aussi être un composant électronique apte à transmettre des données par radiofréquence -notamment des microcircuits ou étiquettes RFID-ou par hautes fréquences (NFC).

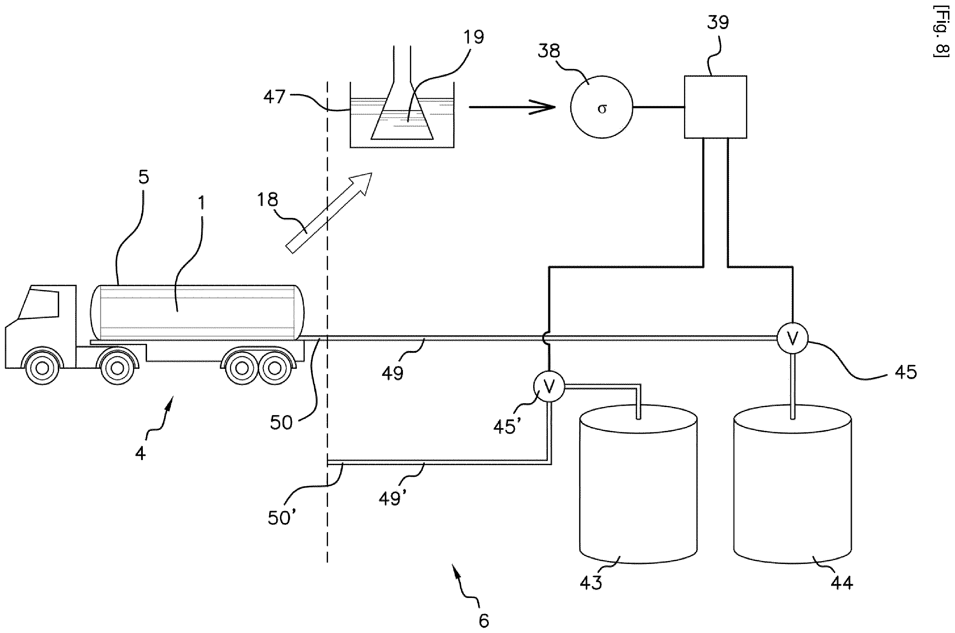

Une illustration schématique d'une installation s'étendant sur un site 6 de livraison, recevant un véhicule 4 de transport et de livraison dudit liquide 1 à transférer est représentée en figure 8. L'installation de la figure 8 permet notamment la mise en oeuvre du deuxième mode de réalisation d'un procédé selon l'invention dont un logigramme est donné en figure 3. Dans le mode de réalisation illustré en figure 8, le site 6 de livraison dudit liquide 1 à transférer présente deux contenants 43, 44 de stockage de deux liquides de stock distincts. Le contenant 44 de stockage est pourvu d'une conduite 49 de remplissage adaptée pour pouvoir être raccordée à un véhicule 4 de transport et de livraison. La conduite 49 est munie d'une vanne 45 et d'un raccord 50 permettant un raccordement de la citerne 5 du véhicule 4 de transport au contenant 44 de stockage. Le contenant 43 de stockage est pourvu d'une conduite 49' de remplissage adaptée pour pouvoir être raccordée au véhicule 4 de transport et de livraison. La conduite 49' est munie d'une vanne 45' et d'un raccord 50' permettant un raccordement de la citerne 5 du véhicule 4 de transport au contenant 44 de stockage. L'installation représentée en figure 8 comprend aussi un dispositif 47 de régulation et d'ajustement de la température d'un échantillon 19 de liquide 1 à transférer, prélevé dans la citerne 5, à une température prédéterminée comprise entre +4,8°C et +30°C, par exemple de l'ordre de +20°C. Elle comprend aussi un dispositif 38 d'analyse de conductivité. Le dispositifs 38 d'analyse de conductivité communique avec un dispositif 39 de contrôle et de pilotage des vannes 45, 45'. À son arrivée sur le site 6 de livraison, il est procédé au raccordement de la citerne 5 du véhicule 4 de livraison à l'un des raccords 50,50' des conduites 49,49' de remplissage correspondant aux données administratives de livraison du liquide 1 à transférer. Dans l'installation représentée en figure 8, le véhicule 4 de livraison est raccordé à la conduite 49 de remplissage communiquant avec le contenant 44 de stockage.

Rien n'empêche cependant de prévoir, selon un mode réalisation non représenté, que le site 6 de livraison dudit liquide 1 à transférer présente deux contenants 43, 44 de stockage de deux liquides de stock distincts et une conduite unique de raccordement des contenants de stockage au véhicule 4 de transport et de livraison. La conduite de raccordement peut être équipée en série d'une vanne trois voies amont (selon le sens de transfert dudit liquide 1 à transférer, à partir de la citerne 5 vers les contenants 43,44 de stockage) adaptée pour orienter un débit dudit liquide 1 à transférer dans le contenant 43 de stockage amont et d'une vanne d'ouverture/fermeture de la conduite 49 adaptée pour autoriser/interdire un écoulement dudit liquide 1 à transférer dans le contenant 43 de stockage aval. La position des vannes d'ouverture/fermeture aval et trois voies amont est contrôlée par le dispositif informatique de contrôle en fonction de données de conductivité électrique dudit liquide 1 à transférer reçues du dispositif d'analyse de conductivité et de d'intervalles prédéterminés de valeurs de conductivité électrique de chaque liquide de stock contenu dans chaque contenant 43, 44 de stockage. Ces données prédéterminées peuvent être stockées dans le dispositif 39 informatique lui-même ou être stockées à distance dans une base de données distante et interrogeable par le dispositif 39 informatique.

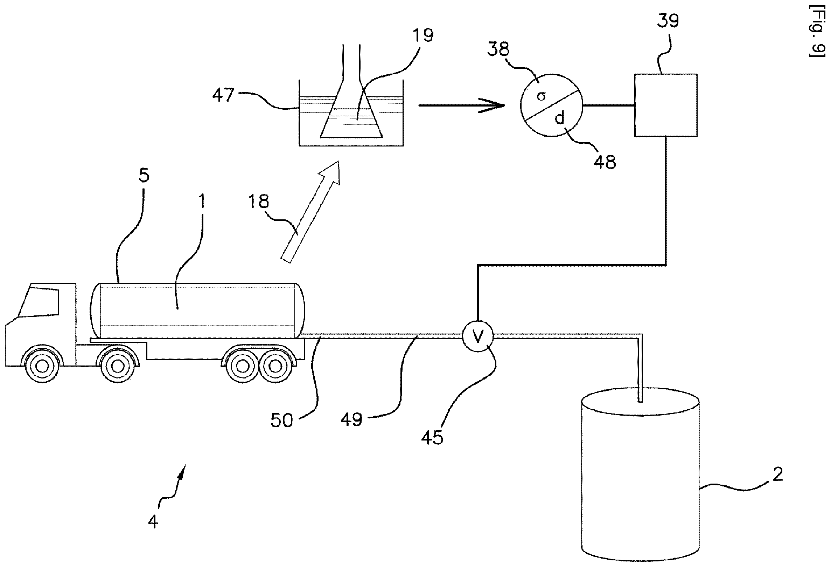

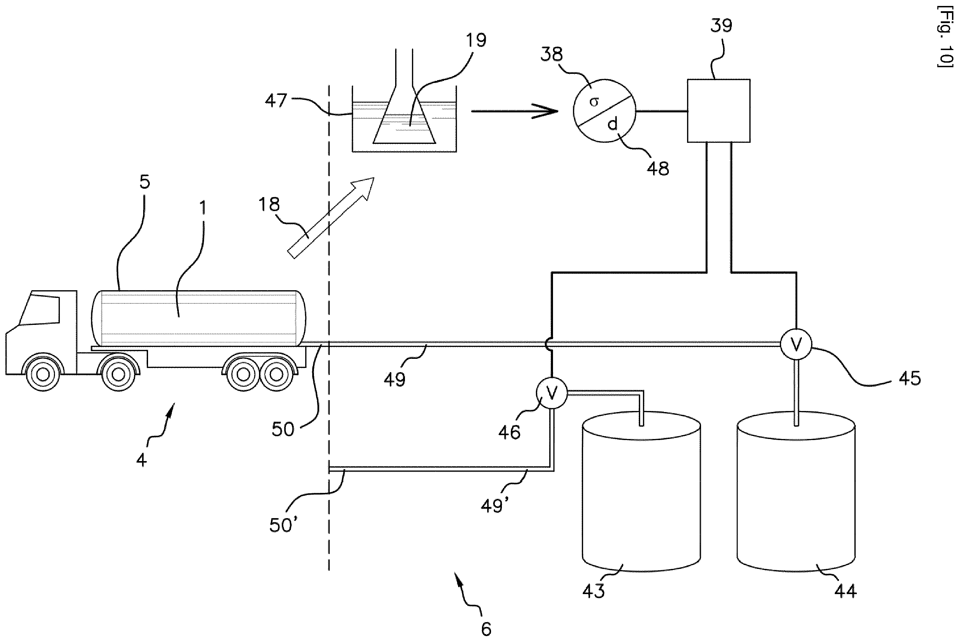

Une illustration schématique d'une variante de l'installation illustrée en figure 8, s'étendant sur un site 6 de livraison, recevant un véhicule 4 de transport et de livraison dudit liquide 1 à transférer est représentée en figure 9. Dans cette variante, l'installation comprend, outre un dispositif 38 d'analyse de la conductivité, un dispositif 48 d'analyse de la densité et/ou de la masse volumique de l'échantillon 19 prélevé et dont la température est ajustée. Une telle mesure de la densité et/ou de la masse volumique de l'échantillon 19 est indicatrice du titre dudit liquide 1 à transférer. L'installation bénéficie alors d'une double barrière technique. Dans cette variante représentée en figure 9, l'installation comprend un contenant 2 unique de stockage. Bien entendu, rien n'empêche de prévoir que l'installation comprenne au moins deux contenants 43,44 de stockage de deux liquides de stock comme illustré en figure 10. Le contenant 44 de stockage est pourvu d'une conduite 49 de remplissage, adaptée pour pouvoir être raccordée à un véhicule 4 de transport et de livraison par un raccord 50. La conduite 49 est munie d'une vanne 45 d'ouverture/fermeture de la conduite 49 de remplissage, pilotable par le dispositif 39 informatique de contrôle. Le contenant 43 de stockage est pourvu d'une conduite 49' de remplissage adaptée pour pouvoir être raccordée au véhicule 4 de transport et de livraison par un raccord 50'. La conduite 49' est munie d'une vanne 45' d'ouverture/fermeture de la conduite 49' de remplissage, pilotable par le dispositif 39 informatique de contrôle.

Dans ces modes de réalisation, les vannes 45,46 d'ouverture/fermeture des conduites 49,49' de remplissage sont avantageusement des vannes normalement fermées.

Rien n'empêche de prévoir que la conduite 49 de raccordement soit équipée en série de vanne 46 trois voies amont et de vanne 45 d'ouverture/fermeture aval de la conduite 49 comme décrit en figure 8.

Cela étant, rien n'empêche cependant de prévoir une conduite de remplissage unique munie d'un raccord unique, de dispositifs d'analyse de conductivité et de mesure de température uniques et d'une vanne trois voies adaptée pour permettre que :
- dans un premier état de la vanne trois voies, dudit liquide 1 à transférer remplisse la chambre de mesure mais ne s'écoule dans aucun des contenants de stockage,
- dans un deuxième état de la vanne trois voies, dudit liquide à transférer puisse s'écouler dans l'un seulement des contenants de stockage, et
- dans un troisième état de la vanne trois voies, dudit liquide à transférer puisse s'écouler dans l'autre seulement des contenants de stockage.
Bien entendu, dans ce mode de réalisation, il convient de prévoir une purge et un rinçage de la conduite de remplissage entre deux livraisons.

L'invention se rapporte également à un procédé de transfert d'un liquide à transférer 1 dans une citerne 5, 33 ou une pluralité de citernes 5, 33 d'un véhicule automobile de livraison. Selon cette variante de l'invention, le liquide à transférer 1 est initialement contenu dans un contenant 2 d'une installation fixe adaptée pour recevoir le véhicule 4, 32 de livraison. La ou la pluralité de citernes 5, 33 sont susceptibles de contenir un liquide 3 de stock. Le procédé d'identification prédictive peut également être appliqué à cette situation afin de réaliser l'identification prédictive d'un risque de mélange inapproprié dudit liquide à transférer 1 et dudit liquide de stock 3.

En modifiant la position de la vanne 45, 45' et en la plaçant entre la citerne 5 du véhicule 4 et le dispositifs 38, 39, 39', 41, les installations décrites aux figures 5 et 6 peuvent être permettre d'inverser le système afin de contrôler, avant son transfert, la conductivité électrique d'un liquide de transfert 1 provenant des contenants 43, 44 de stockage de l'installation en direction de la ou des citernes 5, 33 du véhicule 4. Les systèmes décrits aux figures 7 à 11 peuvent également être adaptés pour procéder au procédé de transfert d'un liquide à transférer depuis l'installation vers la citerne 5, 33 du véhicule 4.

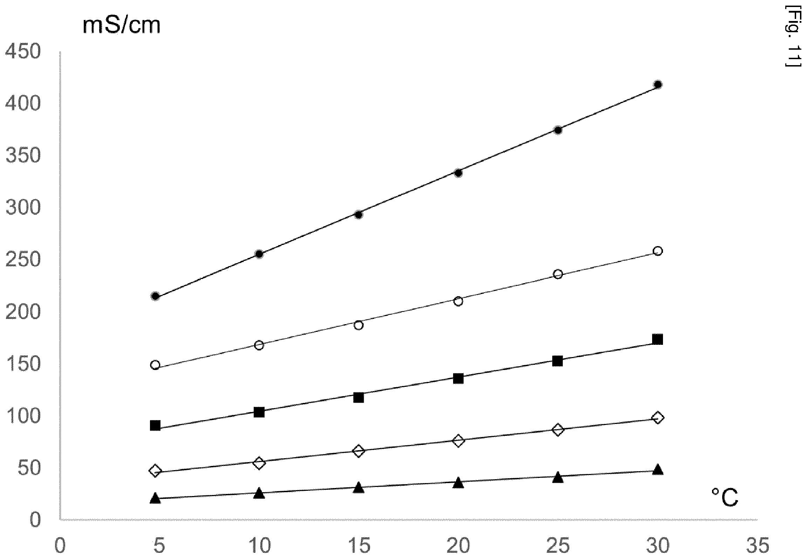

La figure 11 est une représentation graphique de la variation de la valeur moyenne de conductivité électrique (σ, mS/cm) en fonction de la température de liquides, comprise entre 4,8°C et 30°C. Dans la figure 11 :
- le symbole ● (cercle plein) correspond à une solution d'hydroxyde de sodium en proportion massique de 20% +/-1 %,
- le symbole ∘ (cercle vide) correspond à une solution d'acide sulfurique en proportion massique de 70% +/-1%,
- le symbole ■ (carré plein) correspond à une solution d'hypochlorite de sodium (eau de Javel) présentant un pourcentage de chlore actif compris entre 9% et 16%,
- le symbole ◊ (losange vide) correspond à une solution d'acide phosphorique en proportion massique de 85% +/-1%, et
- le symbole A(triangle plein) correspond à une solution de chlorure ferrique en proportion massique de 41% +/-1%.

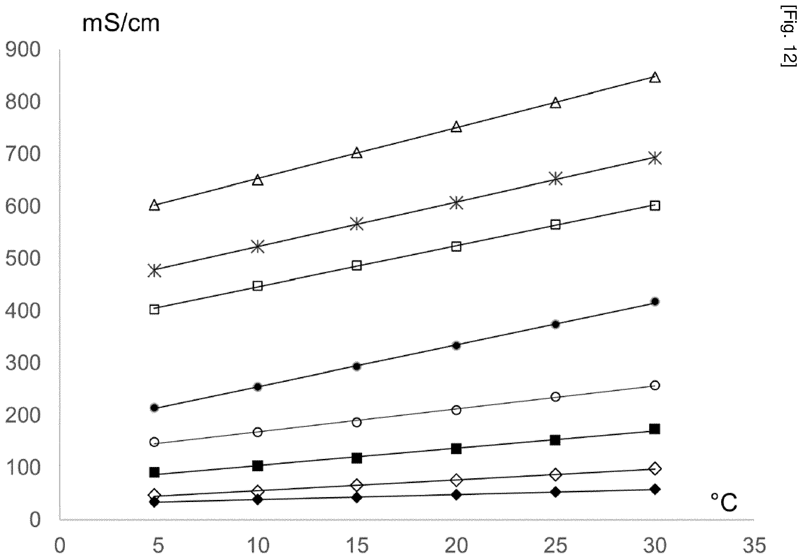

La figure 12 est une représentation graphique de la variation de la valeur moyenne de conductivité électrique (σ, mS/cm) en fonction de la température de liquides. Dans la figure 11 :
- le symbole ◆ (losange plein) correspond à une solution de chlorite de sodium en proportion massique de 7,5% +/- 1%,
- le symbole ◊ (losange vide) correspond à une solution d'acide phosphorique en proportion massique de 85% +/- 1%,
- le symbole ■ (carré plein) correspond à une solution d'hypochlorite de sodium (eau de Javel) présentant un pourcentage de chlore actif compris entre 9% et 16%,
- le symbole ∘ (cercle vide) correspond à une solution d'acide sulfurique en proportion massique de 70% +/-1%,
- le symbole ● (cercle plein) correspond à une solution d'hydroxyde de sodium en proportion massique de 20% +/-1%,
- le symbole □ (carré vide) correspond à une solution d'acide nitrique en proportion massique comprise entre 57% et 63%,
- le symbole * (étoile) correspond à une solution d'acide chlorhydrique en proportion massique comprise entre 30% et 35%, et
- le symbole Δ (triangle vide) correspond à une solution d'acide nitrique en proportion massique comprise entre 30% et 35%.

Les valeurs numériques correspondant aux figures 11 et 12 notamment, sont données aux tables1 à 33 ci-dessous. Bien entendu, toute valeur de conductivité électrique d'une solution liquide, à une température comprise entre de l'ordre de 0°C et au moins de l'ordre de +35°C peut être extrapolée par régression linéaire à partir des données suivantes correspondantes. Il est également possible d'obtenir les valeurs de conductivités électriques exposées dans ces tables en réalisant une étude statistique d'un nombre de mesures de conductivité électrique déterminé, par exemple, cinquante mesures pour lesquels on peut déterminer une moyenne ou une moyenne tronquée.

**[Table 1]**

| Solutions Hypochlorite de sodium 9% à 16% | | | | | | |
|---|---|---|---|---|---|---|
| T°C | 4,8 | 10 | 15 | 20 | 25 | 30 |
| σₘᵢₙ, mS/cm | 85,900 | 97,647 | 110,784 | 128,431 | 146,078 | 167,476 |
| σₘₐₓ, mS/cm | 105,160 | 120,054 | 136 ;884 | 157,080 | 175,032 | 196,995 |

**[Table 2]**

| Solutions acide chlorhydrique 9% +/- 1% | | | | | | |
|---|---|---|---|---|---|---|
| T°C | 4,8 | 10 | 15 | 20 | 25 | 30 |
| σₘᵢₙ, mS/cm | 425,490 | 468,627 | 512,745 | 553,922 | 598,039 | 633,333 |
| σₘₐₓ, mS/cm | 442,680 | 487,560 | 533,460 | 576,300 | 622,200 | 658,920 |

**[Table 3]**

| Solutions acide chlorhydrique 25% +/- 1% | | | | | | |
|---|---|---|---|---|---|---|
| T°C | 4,8 | 10 | 15 | 20 | 25 | 30 |
| σₘᵢₙ, mS/cm | 529,412 | 582,353 | 622,549 | 665,686 | 714,706 | 765,686 |
| σₘₐₓ, mS/cm | 550,800 | 605,880 | 647,700 | 692,580 | 743,580 | 796,620 |

**[Table 4]**

| Solutions acide chlorhydrique 33% +/- 1% | | | | | | |
|---|---|---|---|---|---|---|
| T°C | 4,8 | 10 | 15 | 20 | 25 | 30 |
| σₘᵢₙ, mS/cm | 474,257 | 507,921 | 556,436 | 595,050 | 636,634 | 682,178 |
| σₘₐₓ, mS/cm | 499,800 | 539,580 | 586,500 | 626,280 | 673,200 | 717,060 |

**[Table 5]**

| Solutions acide chlorhydrique 35% +/- 1% | | | | | | |
|---|---|---|---|---|---|---|
| T°C | 4,8 | 10 | 15 | 20 | 25 | 30 |
| σₘᵢₙ, mS/cm | 441,176 | 485,294 | 528,431 | 563,725 | 611,765 | 647,059 |
| σₘₐₓ, mS/cm | 483,790 | 518,130 | 567,620 | 607,010 | 649,430 | 695,890 |

**[Table 6]**

| Solutions acide chlorhydrique de 30% à 35% | | | | | | |
|---|---|---|---|---|---|---|
| T°C | 4,8 | 10 | 15 | 20 | 25 | 30 |
| σₘᵢₙ, mS/cm | 445,545 | 490,099 | 533,663 | 569,307 | 617,822 | 653,465 |
| σₘₐₓ, mS/cm | 510,050 | 557,520 | 600,950 | 645,390 | 689,830 | 733,260 |

**[Table 7]**

| Solutions acide nitrique 15% +/- 1% | | | | | | |
|---|---|---|---|---|---|---|
| T°C | 4,8 | 10 | 15 | 20 | 25 | 30 |
| σₘᵢₙ, mS/cm | 454,902 | 496,078 | 531,373 | 572,549 | 609,804 | 645,098 |
| σₘₐₓ, mS/cm | 473,280 | 516,120 | 552,840 | 595,680 | 634,440 | 671,160 |

**[Table 8]**

| Solutions acide nitrique 25% +/- 1% | | | | | | |
|---|---|---|---|---|---|---|
| T°C | 4,8 | 10 | 15 | 20 | 25 | 30 |
| σₘᵢₙ, mS/cm | 575,490 | 620,588 | 669,608 | 716,667 | 759,804 | 807,843 |
| σₘₐₓ, mS/cm | 598,740 | 645,660 | 696,660 | 745,620 | 790,500 | 840,480 |

**[Table 9]**

| Solutions acide nitrique de 30% à 35% | | | | | | |
|---|---|---|---|---|---|---|
| T°C | 4,8 | 10 | 15 | 20 | 25 | 30 |
| σₘᵢₙ, mS/cm | 581,373 | 623,529 | 678,431 | 724,510 | 767,647 | 816,667 |
| σₘₐₓ, mS/cm | 613,020 | 666,060 | 714,000 | 766,020 | 814,980 | 860,880 |

**[Table 10]**

| Solutions acide nitrique 53% +/- 1% | | | | | | |
|---|---|---|---|---|---|---|
| T°C | 4,8 | 10 | 15 | 20 | 25 | 30 |
| σₘᵢₙ, mS/cm | 436,275 | 479,412 | 521,569 | 561,765 | 602,941 | 646,078 |
| σₘₐₓ, mS/cm | 453,900 | 498,780 | 542,640 | 584,460 | 627,300 | 672,180 |

**[Table 11]**

| Solutions acide nitrique de 57% à 63% | | | | | | |
|---|---|---|---|---|---|---|
| T°C | 4,8 | 10 | 15 | 20 | 25 | 30 |
| σₘᵢₙ, mS/cm | 380,198 | 421,782 | 457,426 | 491,089 | 531,683 | 560,396 |
| σₘₐₓ, mS/cm | 426,220 | 474,700 | 516,110 | 555,500 | 598,930 | 642,360 |

**[Table 12]**

| Solutions acide phosphorique de 74,7% à 75,7% | | | | | | |
|---|---|---|---|---|---|---|
| T°C | 4,8 | 10 | 15 | 20 | 25 | 30 |
| σₘᵢₙ, mS/cm | 73,663 | 83,861 | 94,257 | 106,931 | 120,792 | 136,634 |
| σₘₐₓ, mS/cm | 77,366 | 90,395 | 104,030 | 117,160 | 131,300 | 144,430 |

**[Table 13]**

| Solutions acide phosphorique 85% +/- 1% | | | | | | |
|---|---|---|---|---|---|---|
| T°C | 4,8 | 10 | 15 | 20 | 25 | 30 |
| σₘᵢₙ, mS/cm | nd | nd | nd | nd | 84,902 | 96,470 |
| σₘₐₓ, mS/cm | nd | nd | nd | nd | 88,332 | 100,368 |

| | | | | | | |
|---|---|---|---|---|---|---|
| nd : non déterminé | | | | | | |

**[Table 14]**

| Solutions acide sulfurique 20% +/- 1% | | | | | | |
|---|---|---|---|---|---|---|
| T°C | 4,8 | 10 | 15 | 20 | 25 | 30 |
| σₘᵢₙ, mS/cm | 489,216 | 532,353 | 576,471 | 614,706 | 655,882 | 694,118 |
| σₘₐₓ, mS/cm | 508,980 | 553,860 | 599,760 | 639,540 | 682,380 | 722,160 |

**[Table 15]**

| Solutions acide sulfurique 33% à 35% | | | | | | |
|---|---|---|---|---|---|---|
| T°C | 4,8 | 10 | 15 | 20 | 25 | 30 |
| σₘᵢₙ, mS/cm | 529,412 | 575,490 | 630,39 | 684,314 | 735,294 | 789,216 |
| σₘₐₓ, mS/cm | 555,900 | 607,920 | 661,980 | 718,080 | 767,040 | 824,160 |

**[Table 16]**

| Solutions acide sulfurique 40,6% +/- 1% | | | | | | |
|---|---|---|---|---|---|---|
| T°C | 4,8 | 10 | 15 | 20 | 25 | 30 |
| σₘᵢₙ, mS/cm | 509,804 | 564,706 | 614,706 | 670,588 | 725,490 | 784,314 |
| σₘₐₓ, mS/cm | 530,400 | 587,520 | 639,540 | 697,680 | 754,800 | 816,000 |

**[Table 17]**

| Solutions acide sulfurique 50% +/- 1% | | | | | | |
|---|---|---|---|---|---|---|
| T°C | 4,8 | 10 | 15 | 20 | 25 | 30 |
| σₘᵢₙ, mS/cm | 377,451 | 424,510 | 462,745 | 502,941 | 550,980 | 595,098 |
| σₘₐₓ, mS/cm | 392,700 | 441,660 | 481,440 | 523,260 | 573,240 | 619,140 |

**[Table 18]**

| Solutions acide sulfurique 70% +/- 1% | | | | | | |
|---|---|---|---|---|---|---|
| T°C | 4,8 | 10 | 15 | 20 | 25 | 30 |
| σₘᵢₙ, mS/cm | 146,078 | 164,706 | 183,333 | 205,882 | 231,373 | 252,941 |
| σₘₐₓ, mS/cm | 151,980 | 171,360 | 190,740 | 214,200 | 240,720 | 263,160 |

**[Table 19]**

| Solutions acide sulfurique 95% à 98% | | | | | | |
|---|---|---|---|---|---|---|
| T°C | 4,8 | 10 | 15 | 20 | 25 | 30 |
| σₘᵢₙ, mS/cm | 41,835 | 54,372 | 64,442 | 73,392 | 82,041 | 91,204 |
| σₘₐₓ, mS/cm | 67,367 | 80,598 | 96,556 | 109,080 | 121,200 | 137,360 |

**[Table 20]**

| Solutions bisulfite de sodium 38% à 40% | | | | | | |
|---|---|---|---|---|---|---|
| T°C | 4,8 | 10 | 15 | 20 | 25 | 30 |
| σₘᵢₙ, mS/cm | 63,824 | 74,412 | 85,196 | 97,745 | 109,804 | 122,549 |
| σₘₐₓ, mS/cm | 66,402 | 77,418 | 88,638 | 101,694 | 114,240 | 127,500 |

**[Table 21]**

| Solutions chlorite de sodium 25% +/- 1% | | | | | | |
|---|---|---|---|---|---|---|
| T°C | 4,8 | 10 | 15 | 20 | 25 | 30 |
| σₘᵢₙ, mS/cm | 65,784 | 76,471 | 89,118 | 100,000 | 111,765 | 124,510 |
| σₘₐₓ, mS/cm | 68,442 | 79,560 | 92,718 | 104,040 | 116,280 | 129,540 |

**[Table 22]**

| Solutions chlorite de sodium 7,5% +/- 1% | | | | | | |
|---|---|---|---|---|---|---|
| T°C | 4,8 | 10 | 15 | 20 | 25 | 30 |
| σₘᵢₙ, mS/cm | 34,020 | 38,235 | 42,353 | 47,451 | 52,549 | 57,647 |
| σₘₐₓ, mS/cm | 35,394 | 39,780 | 44,064 | 49,368 | 54,672 | 59,976 |

**[Table 23]**

| Solutions chlorure ferrique 41% +/- 1% | | | | | | |
|---|---|---|---|---|---|---|
| T°C | 4,8 | 10 | 15 | 20 | 25 | 30 |
| σₘᵢₙ, mS/cm | 20,784 | 25,588 | 30,784 | 35,000 | 40,392 | 47,745 |
| σₘₐₓ, mS/cm | 21,624 | 26,622 | 32,028 | 37,500 | 42,024 | 49,674 |

**[Table 24]**

| Solutions hydroxyde de sodium 20% +/- 1% | | | | | | |
|---|---|---|---|---|---|---|
| T°C | 4,8 | 10 | 15 | 20 | 25 | 30 |
| σₘᵢₙ, mS/cm | 210,784 | 250,000 | 287,255 | 326,471 | 366,667 | 409,804 |
| σₘₐₓ, mS/cm | 219,300 | 260,100 | 298,860 | 339,660 | 381,480 | 426,360 |

**[Table 25]**

| Solutions hydroxyde de sodium 30,5% +/- 1% | | | | | | |
|---|---|---|---|---|---|---|
| T°C | 4,8 | 10 | 15 | 20 | 25 | 30 |
| σₘᵢₙ, mS/cm | 96,078 | 119,608 | 150,980 | 182,353 | 225,490 | 258,824 |
| σₘₐₓ, mS/cm | 99,960 | 124,440 | 157,080 | 189,720 | 234,600 | 269,280 |

**[Table 26]**

| Solutions hydroxyde de sodium 50% +/- 1% | | | | | | |
|---|---|---|---|---|---|---|
| T°C | 4,8 | 10 | 15 | 20 | 25 | 30 |
| σₘᵢₙ, mS/cm | nd | nd | nd | 91,961 | 118,627 | 147,059 |
| σₘₐₓ, mS/cm | nd | nd | nd | 95,676 | 123,420 | 153,000 |

| | | | | | | |
|---|---|---|---|---|---|---|
| nd: non déterminé | | | | | | |

**[Table 27]**

| Solutions peroxyde d'hydrogène 12% +/- 1% | | | | | | |
|---|---|---|---|---|---|---|
| T°C | 4,8 | 10 | 15 | 20 | 25 | 30 |
| σₘᵢₙ, mS/cm | | | | 0,070 | | |
| σₘₐₓ, mS/cm | | | | 0,080 | | |

**[Table 28]**

| Solutions peroxyde d'hydrogène 35% +/- 1% | | | | | | |
|---|---|---|---|---|---|---|
| T°C | 4,8 | 10 | 15 | 20 | 25 | 30 |
| σₘᵢₙ, mS/cm | | | | 0,100 | | |
| σₘₐₓ, mS/cm | | | | 0,140 | | |

**[Table 29]**

| Solutions acide acétique 100% | | | | | | |
|---|---|---|---|---|---|---|
| T°C | 4,8 | 10 | 15 | 20 | 25 | 30 |
| σₘᵢₙ, mS/cm | | | | 0,000 | | |
| σₘₐₓ, mS/cm | | | | 0,000 | | |

**[Table 30]**

| Solutions acide acétique 75% +/- 1% | | | | | | |
|---|---|---|---|---|---|---|
| T°C | 4,8 | 10 | 15 | 20 | 25 | 30 |
| σₘᵢₙ, mS/cm | | | | 0,150 | | |
| σₘₐₓ, mS/cm | | | | 0,160 | | |

**[Table 31]**

| Solutions ammoniaque 20,5% +/- 1% | | | | | | |
|---|---|---|---|---|---|---|
| T°C | 4,8 | 10 | 15 | 20 | 25 | 30 |
| σₘᵢₙ, mS/cm | | | | 0,900 | | |
| σₘₐₓ, mS/cm | | | | 1,100 | | |

**[Table 32]**

| Solutions acide citrique 50% +/- 1% | | | | | | |
|---|---|---|---|---|---|---|
| T°C | 4,8 | 10 | 15 | 20 | 25 | 30 |
| σₘᵢₙ, mS/cm | | | | 3,000 | | |
| σₘₐₓ, mS/cm | | | | 3,500 | | |

**[Table 33]**

| Solution d'urée 40% +/- 1% | | | | | | |
|---|---|---|---|---|---|---|
| T°C | 4,8 | 10 | 15 | 20 | 25 | 30 |
| σₘᵢₙ, mS/cm | 0,782 | 0,853 | 0,932 | 1,020 | 1,118 | 1,226 |
| σₘₐₓ, mS/cm | 0,814 | 0,888 | 0,969 | 1,061 | 1,163 | 1,275 |

Comme cela est illustré par les exemples des tables 1 à 32, l'invention s'applique à des liquides non dilués, concentrés. En particulier, le liquide à transférer 1 et le liquide de stock 3 peuvent comporter respectivement une proportion massique strictement supérieure à 0% et jusqu'à 100%, leur proportion massique peut être notamment comprise entre 6,5 et 100%.

La conductivité électrique (σ, mS/cm) d'un liquide à transférer, mesurée ou ajustée à une température déterminée et la comparaison de cette valeur de conductivité électrique avec les valeurs de conductivité électrique de liquides de stock à cette température, permet de déterminer si ledit liquide à transférer dont la conductivité électrique est mesurée, correspond ou non au liquide de stock susceptible d'être contenu dans le contenant de stockage. Le risque de mélange inapproprié de liquides incompatibles peut être limité, voire totalement écarté.

L'invention peut faire l'objet de nombreuses variantes et applications autres que celles décrites ci-dessus. En outre, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Procédé d'identification prédictive d'un risque de mélange inapproprié d'un liquide (1) à transférer, dont un transfert dans un contenant (2) de stockage d'un liquide (3) de stock, susceptible d'être contenu dans ledit contenant (2), est envisagé,
procédé dans lequel :
- une mesure (9) de conductivité électrique (σ) dudit liquide (1) à transférer est réalisée sans dilution dudit liquide (1) à transférer,
- la température dudit liquide (1) à transférer dont la conductivité électrique est mesurée, est déterminée (10),
- la valeur (11) de conductivité électrique mesurée est comparée aux valeurs de conductivité électrique d'un intervalle (13) prédéterminé de valeurs de conductivité électrique correspondant audit liquide (3) de stock à la température déterminée, et
- il n'est pas procédé au transfert dudit liquide (1) à transférer dans ledit contenant (2) de stockage lorsque la valeur (9) mesurée de conductivité électrique n'appartient pas à l'intervalle (13) de valeurs de conductivité électrique dudit liquide (3) de stock à la température déterminée.

2. Procédé selon la revendication 1, **caractérisé en ce qu'**il comporte une étape de comparaison de la conductivité électrique mesurée du liquide (1) à transférer avec une base de données d'intervalles de conductivités électriques déterminés de liquides présentant un risque de mélange inapproprié avec le liquide de stock à la température déterminée, si la conductivité électrique mesurée correspond au moins en partie à l'un desdits intervalles, il n'est pas procédé au transfert dudit liquide (1).

3. Procédé selon l'une des revendications 1 et 2, **caractérisé en ce que** la température dudit liquide (1) à transférer dont la conductivité électrique est mesurée, est déterminée par une mesure de cette température.

4. Procédé selon l'une des revendications 1 à 3, **caractérisé en ce que** le liquide à transférer (1) et le liquide de stock (3) comportent respectivement une proportion massique strictement supérieure à 0% et jusqu'à 100%, de préférence, leur proportion massique est comprise entre 6,5 et 100%.

5. Procédé selon l'une des revendications 1 à 3, **caractérisé en ce que** la température dudit liquide (1) à transférer dont la conductivité électrique est mesurée, est ajustée à une valeur de température prédéterminée préalablement à la mesure de conductivité électrique.

6. Procédé selon l'une des revendications 1 à 5, **caractérisé en ce que** la température dudit liquide (1) à transférer dont la conductivité électrique est mesurée, est de +20°C +/- 0,1°C,
**en ce que** ledit liquide (3) de stock est choisi dans un premier groupe de liquides de stock, formé :
- d'acide acétique pur et de valeur de conductivité électrique nulle à une température de +20°C +/- 0,1°C,
- de solutions aqueuses de peroxyde d'hydrogène en proportion massique de 12% +/-1% et de valeurs de conductivité électrique à une température de +20°C +/- 0,1°C, appartenant à un intervalle prédéterminé de valeurs de conductivité électrique comprises entre 0,070 mS/cm et 0,080 mS/cm,
- de solutions aqueuses de peroxyde d'hydrogène en proportion massique de 35% +/-1% et de valeurs de conductivité électrique à une température de +20°C +/- 0,1°C, appartenant à un intervalle prédéterminé de valeurs de conductivité électrique comprises entre 0,120 mS/cm et 0,140 mS/cm,
- de solutions aqueuses d'acide acétique en proportion massique de 75% +/-1% et de valeurs de conductivité électrique à une température de +20°C +/-0,1°C, appartenant à un intervalle prédéterminé de valeurs de conductivité électrique comprises entre 0,150 mS/cm et 0,160 mS/cm,
- de solutions aqueuses d'ammoniaque en proportion massique de 20,5% +/-1% et de valeurs de conductivité électrique à une température de +20°C +/-0,1°C, appartenant à un intervalle prédéterminé de valeurs de conductivité électrique comprises entre 0,900 mS/cm et 1,100 mS/cm,
- de solutions aqueuses d'acide citrique en proportion massique de 50% +/-1% et de valeurs de conductivité électrique à une température 20°C +/- 0,1°C, appartenant à un intervalle prédéterminé de valeurs de conductivité électrique comprises entre 3,000 mS/cm et 3,500 mS/cm,
- de solutions aqueuses de chlorure ferrique en proportion massique de 41% +/-1% et de valeurs de conductivité électrique à une température de +20°C +/- 0,1°C, appartenant à un intervalle prédéterminé de valeurs de conductivité électrique comprises entre 35,000 mS/cm et 37,500 mS/cm,
- de solutions aqueuses de chlorite de sodium en proportion massique de 7,5% +/-1% et de valeurs de conductivité électrique à une température de +20°C +/- 0,1°C, appartenant à un intervalle prédéterminé de valeurs de conductivité électrique comprises entre 47,451 mS/cm et 49,368 mS/cm,
- de solutions aqueuses d'hypochlorite de sodium présentant un pourcentage de chlore actif compris entre 9% et 16% et de valeurs de conductivité électrique à une température de +20°C +/- 0,1°C, appartenant à un intervalle prédéterminé de valeurs de conductivité électrique comprises entre 128,431 mS/cm et 142,800 mS/cm,
- de solutions aqueuses d'hydroxyde de sodium en proportion massique de 30,5% +/- 1% et de valeurs de conductivité électrique à une température de +20°C +/- 0,1°C, appartenant à un intervalle prédéterminé de valeurs de conductivité électrique comprises entre 182,353 mS/cm et 189,720 mS/cm,
- de solutions aqueuses d'acide sulfurique en proportion massique de 70% +/-1% et de valeurs de conductivité électrique à une température de +20°C +/-0,1°C, appartenant à un intervalle prédéterminé de valeurs de conductivité électrique comprises entre 205,882 mS/cm et 214,200 mS/cm,
- de solutions aqueuses d'hydroxyde de sodium en proportion massique de 20% +/- 1% et de valeurs de conductivité électrique à une température de +20°C +/- 0,1°C , appartenant à un intervalle prédéterminé de valeurs de conductivité électrique comprises entre 326,471 mS/cm et 339,660 mS/cm, et
- de l'une des solutions choisies dans un deuxième groupe de liquides de stock, formé :
∘ de solutions aqueuses d'hydroxyde de sodium en proportion massique de 50% +/-1% et de valeurs de conductivité électrique à une température de +20°C +/- 0,1°C, appartenant à un intervalle prédéterminé de valeurs de conductivité électrique comprises entre 91,961 mS/cm et 95,676 mS/cm,
∘ de solutions aqueuses d'acide sulfurique en proportion massique comprise entre 95% et 98% et de valeurs de conductivité électrique à une température de +20°C +/- 0,1°C, appartenant à un intervalle prédéterminé de valeurs de conductivité électrique comprises entre 73,392 mS/cm et 109,080 mS/cm,
∘ de solutions aqueuses de bisulfite de sodium en proportion massique comprise entre 38% et 40% et de valeurs de conductivité électrique à une température de +20°C +/- 0,1°C, appartenant à un intervalle prédéterminé de valeurs de conductivité électrique comprises entre 97,745 mS/cm et 101,694 mS/cm,
∘ de solutions aqueuses de chlorite de sodium en proportion massique de 25% +/-1% et de valeurs de conductivité électrique à une température de +20°C +/- 0,1°C, appartenant à un intervalle prédéterminé de valeurs de conductivité électrique comprises entre 100,000 mS/cm et 104,040 mS/cm,
∘ de solutions aqueuses d'acide phosphorique en proportion massique comprise entre 74,7% et 75,7% et de valeurs de conductivité électrique à une température de +20°C +/-0,1°C, appartenant à un intervalle prédéterminé de valeurs de conductivité électrique comprises entre 106,931 mS/cm et 117,160 mS/cm,
∘ de solutions aqueuses d'acide nitrique en proportion massique comprise entre 57% et 63% et de valeurs de conductivité électrique à une température de +20°C +/- 0,1°C, appartenant à un intervalle prédéterminé de valeurs de conductivité électrique comprises entre 491,089 mS/cm et 555,500 mS/cm,
∘ de solutions aqueuses d'acide sulfurique en proportion massique de 50% +/-1% et de valeurs de conductivité électrique à une température de +20°C +/- 0,1°C, appartenant à un intervalle prédéterminé de valeurs de conductivité électrique comprises entre 502,941 mS/cm et 523,260 mS/cm,
∘ de solutions aqueuses d'acide nitrique en proportion massique de 53% +/-1% et de valeurs de conductivité électrique à une température de +20°C +/- 0,1°C , appartenant à un intervalle prédéterminé de valeurs de conductivité électrique comprises entre 561,765 mS/cm et 584,460 mS/cm,
∘ de solutions aqueuses d'acide chlorhydrique en proportion massique de 9% +/-1% et de valeurs de conductivité électrique à une température de +20°C +/- 0,1°C, appartenant à un intervalle prédéterminé de valeurs de conductivité électrique comprises entre 553,922 mS/cm et 576,300 mS/cm,
∘ de solutions aqueuses d'acide nitrique en proportion massique de 15% +/-1% et de valeurs de conductivité électrique à une température de +20°C +/- 0,1°C, appartenant à un intervalle prédéterminé de valeurs de conductivité électrique comprises entre 572,549 mS/cm et 595,680 mS/cm.
∘ de solutions aqueuses d'acide chlorhydrique en proportion massique de 33% +/-1% et de valeurs de conductivité électrique à une température de +20°C +/- 0,1°C, appartenant à un intervalle prédéterminé de valeurs de conductivité électrique comprises entre 595,050 mS/cm et 626,280 mS/cm,
∘ de solutions aqueuses d'acide chlorhydrique en proportion massique de 35% +/-1% et de valeurs de conductivité électrique à une température de +20°C +/- 0,1°C, appartenant à un intervalle prédéterminé de valeurs de conductivité électrique comprises entre 563,725 mS/cm et 607,010 mS/cm,
∘ de solutions aqueuses d'acide sulfurique en proportion massique de 20% +/-1% et de valeurs de conductivité électrique à une température de +20°C +/- 0,1°C, appartenant à un intervalle prédéterminé de valeurs de conductivité électrique comprises entre 614,706 mS/cm et 639,540 mS/cm,
∘ de solutions aqueuses d'acide chlorhydrique en proportion massique de 25% +/-1% et de valeurs de conductivité électrique à une température de +20°C +/- 0,1°C, appartenant à un intervalle prédéterminé de valeurs de conductivité électrique comprises entre 665,686 mS/cm et 692,580 mS/cm,
∘ de solutions aqueuses d'acide sulfurique en proportion massique comprise entre 33% et 35% et de valeurs de conductivité électrique à une température de +20°C +/- 0,1°C, appartenant à un intervalle prédéterminé de valeurs de conductivité électrique comprises entre 684,314 mS/cm et 718,080 mS/cm,
∘ de solutions aqueuses d'acide sulfurique en proportion massique de 40,6% +/-1% et de valeurs de conductivité électrique à une température de +20°C +/- 0,1°C, appartenant à un intervalle prédéterminé de valeurs de conductivité électrique comprises entre 670,588 mS/cm et 697.680 mS/cm,
∘ de solutions aqueuses d'acide nitrique en proportion massique de 25% +/-1% et de valeurs de conductivité électrique à une température de +20°C +/- 0,1°C, appartenant à un intervalle prédéterminé de valeurs de conductivité électrique comprises entre 716,667 mS/cm et 745,620 mS/cm, et
∘ de solutions aqueuses d'acide nitrique en proportion massique comprise entre 30% et 35% et de valeurs de conductivité électrique à une température de +20°C +/- 0,1°C, appartenant à un intervalle prédéterminé de valeurs de conductivité électrique comprises entre 724,510 mS/cm et 766,020 mS/cm,
et **en ce que** la valeur de conductivité électrique mesurée dudit liquide (1) à transférer est comparée aux valeurs de conductivité électrique dudit liquide (3) de stock à la température de +20°C +/- 0,1°C.

7. Procédé selon l'une des revendications 1 à 5, **caractérisé en ce que** la température dudit liquide à transférer dont la conductivité électrique est mesurée, est déterminée et la valeur mesurée de conductivité électrique dudit liquide à transférer à la température déterminée est comparée aux valeurs de conductivité électrique de l'intervalle prédéterminé de valeurs de conductivité dudit liquide de stock à la température déterminée,
ledit liquide de stock étant choisi dans un troisième groupe de liquides de stock, formé :
- de solutions aqueuses de chlorure ferrique en proportion massique de 41% +/-1%,
- de solutions aqueuses de chlorite de sodium en proportion massique de 7,5% +/-1%,
- de solutions aqueuses d'hypochlorite de sodium présentant un pourcentage de chlore actif compris entre 9% et 16%,
- de solutions aqueuses d'acide sulfurique en proportion massique de 70% +/-1%,
- de solutions aqueuses d'hydroxyde de sodium en proportion massique de 30,5% +/- 1%,
- de solutions aqueuses d'hydroxyde de sodium en proportion massique de 20% +/- 1%,
- de solutions aqueuses d'acide sulfurique en proportion massique comprise entre 95% et 98%,
- de solutions aqueuses de bisulfite de sodium en proportion massique comprise entre 38% et 40%,
- des solutions aqueuses de chlorite de sodium en proportion massique de 25% +/-1%,
- des solutions aqueuses d'acide phosphorique en proportion massique comprise entre 74,7% et 75,7%,
- de solutions aqueuses d'acide nitrique en proportion massique comprise entre 57% et 63%,
- des solutions aqueuses d'acide sulfurique en proportion massique de 50% +/-1%,
- de solutions aqueuses d'acide nitrique en proportion massique de 53% +/-1%,
- des solutions aqueuses d'acide chlorhydrique en proportion massique de 9% +/-1%,
- de solutions aqueuses d'acide nitrique en proportion massique de 15% +/-1%,
- des solutions aqueuses d'acide chlorhydrique en proportion massique comprise entre 30% et 35%,
- de solutions aqueuses d'acide sulfurique en proportion massique de 20% +/-1%,
- des solutions aqueuses d'acide chlorhydrique en proportion massique de 25% +/-1%,
- de solutions aqueuses d'acide sulfurique en proportion massique comprise entre 33% et 35%,
- des solutions aqueuses d'acide sulfurique en proportion massique de 40,6% +/-1%,
- des solutions aqueuses d'acide nitrique en proportion massique comprise entre 30% et 35%, et
- des solutions aqueuses d'acide nitrique en proportion massique de 25% +/-1%,
et **en ce que** la température déterminée dudit liquide à transférer dont la conductivité électrique est mesurée est comprise entre +4,8°C et +30°C.

8. Procédé selon l'une des revendications 1 à 5, **caractérisé en ce que** la température dudit liquide à transférer dont la conductivité électrique est mesurée, étant déterminée, la valeur mesurée de conductivité électrique dudit liquide à transférer est comparée aux valeurs de conductivité électrique, appartenant à l'intervalle prédéterminé de valeurs de conductivité dudit liquide de stock à la même température,
ledit liquide de stock est choisi dans un quatrième groupe de liquides de stock formé :
- de solutions aqueuses de chlorure ferrique en proportion massique de 41% +/-1%,
- de solutions aqueuses de chlorite de sodium en proportion massique de 7,5% +/-1%,
- de solutions aqueuses de chlorite de sodium en proportion massique de 25% +/-1%,
- de solutions aqueuses d'hypochlorite de sodium présentant un pourcentage de chlore actif compris entre 9% et 16%,
- de solutions aqueuses d'hydroxyde de sodium en proportion massique de 30,5% +/-1%,
- de solutions aqueuses d'hydroxyde de sodium en proportion massique de 20% +/- 1%,
- de solutions aqueuses d'acide sulfurique en proportion massique de 50% +/-1%,
- de solutions aqueuses d'acide sulfurique en proportion massique de 40,6%
+/- 1%,
- de solutions aqueuses d'acide chlorhydrique en proportion massique de 9% +/-1%, et
- de solutions aqueuses d'acide chlorhydrique en proportion massique de 33% +/-1%,
et **en ce que** la température déterminée dudit liquide à transférer dont la conductivité électrique est mesurée est comprise entre +4,8°C et +30°C.

9. Procédé selon l'une des revendications 1 à 5, **caractérisé en ce que** la température dudit liquide à transférer dont la conductivité électrique est mesurée, étant déterminée, la valeur mesurée de conductivité électrique dudit liquide à transférer est comparée aux valeurs de conductivité électrique, appartenant à l'intervalle prédéterminé de valeurs de conductivité dudit liquide de stock à la même température,
ledit liquide de stock est choisi dans un cinquième groupe de liquides de stock formé :
- de solutions aqueuses de chlorure ferrique en proportion massique de 41% +/-1%,
- de solutions aqueuses de chlorite de sodium en proportion massique de 7,5% +/-1%,
- de solutions aqueuses d'acide sulfurique en proportion massique comprise entre 95% et 98%,
- de solutions aqueuses d'hypochlorite de sodium présentant un pourcentage de chlore actif compris entre 9% et 16%,
- de solutions aqueuses d'hydroxyde de sodium en proportion massique de 30,5% +/-1%,
- de solutions aqueuses d'hydroxyde de sodium en proportion massique de 20% +/-1%,
- de solutions aqueuses d'acide nitrique en proportion massique comprise entre 57% et 63%,
- de solutions aqueuses d'acide nitrique en proportion massique de 53% +/-1%,
- de solutions aqueuses d'acide chlorhydrique en proportion massique de 33% +/-1 %.
- de solutions aqueuses d'acide sulfurique en proportion massique de 40,6%
+/- 1 %, et
- de solutions aqueuses d'acide nitrique en proportion massique comprise entre 30% et 35%,
et **en ce que** la température déterminée dudit liquide à transférer dont la conductivité électrique est mesurée est comprise entre +4,8°C et +30°C.

10. Procédé selon l'une des revendications 1 à 5, **caractérisé en ce que** la température dudit liquide à transférer dont la conductivité électrique est mesurée étant déterminée, la valeur mesurée de conductivité électrique dudit liquide à transférer est comparée aux valeurs de conductivité électrique appartenant à l'intervalle prédéterminé de valeurs de conductivité dudit liquide de stock à la même température déterminée,
ledit liquide de stock étant choisi dans un huitième groupe de liquides de stock, formé :
- des solutions aqueuses d'hypochlorite de sodium présentant un pourcentage de chlore actif compris entre 9% et 16%,
- des solutions aqueuses d'acide chlorhydrique en proportion massique comprise entre 9% et 35%,
- des solutions aqueuses d'acide nitrique en proportion massique comprise entre 15% et 63%,
- des solutions aqueuses d'acide sulfurique en proportion massique comprise entre 20% et 70%,
- des solutions aqueuses d'acide sulfurique en proportion massique comprise entre 95% et 98%,
- des solutions aqueuses d'acide phosphorique en proportion massique comprise entre 30% et 60%,
- des solutions aqueuses d'acide phosphorique en proportion massique inférieure à 15%,
- des solutions aqueuses d'acide phosphorique en proportion massique comprise entre 74% et 85%,
- des solutions aqueuses de chlorure ferrique en proportion massique inférieure à 41 %,
- des solutions aqueuses d'acide acétique, et
- des solutions aqueuses d'acide citrique en proportion massique inférieure à 50%,
et **en ce que** la température déterminée dudit liquide à transférer dont la conductivité électrique est mesurée est comprise entre +4,8°C et +30°C.
procédé dans lequel il n'est pas procédé au transfert dudit liquide à transférer dans ledit contenant de stockage dans chacune des première et deuxième situations suivantes :
- la valeur mesurée de conductivité électrique dudit liquide à transférer à la température déterminée n'appartient pas à l'intervalle prédéterminé de valeurs de conductivité électrique dudit liquide de stock à la température déterminée, ledit liquide de stock étant une solution aqueuse d'hypochlorite de sodium présentant un pourcentage de chlore actif compris entre 9% et 16%, et
- la valeur mesurée de conductivité électrique dudit liquide à transférer à la température déterminée appartient à l'intervalle prédéterminé de valeurs de conductivité électrique d'une solution aqueuse d'hypochlorite de sodium présentant un pourcentage de chlore actif compris entre 9% et 16% à la température déterminée, ledit liquide de stock étant distinct d'une solution aqueuse d'hypochlorite de sodium présentant un pourcentage de chlore actif compris entre 9% et 16%.

11. Procédé selon l'une des revendications 1 à 10, **caractérisé en ce que** le contenant de stockage dudit liquide de stock est un contenant de stockage d'une pluralité de contenants de stockage, chaque contenant de stockage de cette pluralité de contenants étant destiné à contenir un liquide de stock distinct des liquides de stock contenus dans les autres contenants de la pluralité de contenants de stockage,
chaque contenant étant destiné à contenir un liquide de stock de conductivité électrique à la température déterminée -mesurée et comprise entre 4,8°C et 30°C ou ajustée à la température de +20°C +/- 0,1°C- comprise dans un intervalle prédéterminé de valeurs de conductivité électrique à la température déterminée disjoint de l'intervalle prédéterminé de valeurs de conductivité électrique à la température déterminée de chacun des liquides de stock contenu dans les autres contenants de la pluralité de contenants de stockage, et
**en ce qu'**il n'est procédé à aucun transfert dudit liquide à transférer dans l'un des contenant de la pluralité de contenants, lorsque la valeur mesurée de conductivité électrique dudit liquide à transférer n'appartient à aucun des intervalles prédéterminés de valeurs de conductivité électrique à la température déterminée des liquides de stock.

12. Procédé selon l'une des revendications 1 à 11, **caractérisé en ce qu'**un capteur de mesure de conductivité électrique par induction est utilisé pour la mesure de conductivité électrique.

13. Procédé selon l'une des revendications 1 à 12, **caractérisé en ce que** :
- une mesure (48) de masse volumique dudit liquide (1) à transférer est réalisée sans dilution dudit liquide (1) à transférer,
- la valeur de masse volumique mesurée est comparée à des valeurs prédéterminées de masse volumique dudit liquide (3) de stock à la température déterminée, et
- il n'est pas procédé au transfert dudit liquide (1) à transférer dans ledit contenant de stockage lorsque la valeur de masse volumique mesurée n'appartient pas à un intervalle prédéterminé de valeurs de masse volumique dudit liquide (3) de stock à la température déterminée.

14. Procédé d'approvisionnement d'un contenant (2) de stockage d'un liquide, dit liquide (3) de stock, susceptible d'être contenu dans ledit contenant (2), avec un liquide, dit liquide (1) à transférer, contenu dans une citerne (5,33) ou dans une pluralité de citernes (5, 33) d'un véhicule (4,32) automobile de livraison, le contenant de stockage étant un contenant d'une installation fixe adaptée pour recevoir le véhicule (4,32) automobile de livraison,
procédé dans lequel est mis en oeuvre un procédé selon l'une des revendications 1 à 12 d'identification prédictive d'un risque de mélange inapproprié dudit liquide (1) à transférer et dudit liquide (3) de stock.

15. Procédé selon la revendication 15, **caractérisé en ce que** :
- un raccordement de l'une des citernes de la pluralité de citernes au contenant de stockage est effectué,
- une mesure de la conductivité électrique dudit liquide à transférer contenu dans cette citerne, sans dilution dudit liquide à transférer et une mesure de la température dudit liquide à transférer sont réalisées,
procédé dans lequel il n'est pas procédé au transfert dudit liquide à transférer dans ledit contenant de stockage lorsque la valeur de conductivité électrique mesurée n'appartient pas à l'intervalle prédéterminé de valeurs de conductivité électrique dudit liquide de stock à la température mesurée.

16. Procédé de transfert d'un liquide à transférer (1) dans une citerne (5, 33) ou une pluralité de citernes (5, 33) d'un véhicule automobile de livraison, la ou la pluralité de citerne (5, 33) étant susceptible de contenir un liquide (3) de stock,
le liquide à transférer (1) étant contenu dans un contenant (2) d'une installation fixe adaptée pour recevoir le véhicule (4, 32) automobile de livraison,
procédé de transfert dans lequel est mis en oeuvre un procédé selon l'une des revendications 1 à 12 d'identification prédictive d'un risque de mélange inapproprié dudit liquide à transférer (1) et dudit liquide de stock (3).

17. Véhicule (4) automobile de livraison pour la mise en oeuvre d'un procédé d'approvisionnement selon l'une des revendications 13 à 15, le véhicule (4) automobile de livraison étant équipé de :
- au moins une citerne (5) -notamment une pluralité de citernes- contenant ledit liquide (1) à transférer,
- au moins un dispositif (38,38') de mesure de conductivité électrique dudit liquide (1) à transférer,
- au moins un dispositif (41,41') de mesure de la température dudit liquide (1) à transférer,
- au moins un dispositif (40) de pompage dudit liquide (1) à transférer dans la citerne (5) et de refoulement dudit liquide (1) à transférer dans le contenant (2) de stockage,
- au moins un lecteur (35) d'un identifiant (34) d'un contenant (2) de stockage dudit liquide (3) de stock,
- un dispositif informatique (39) adapté pour pouvoir :
∘ recevoir des données transmises par les dispositifs (38,38',41,41') de mesure de conductivité électrique et de mesure de température dudit liquide à transférer,
∘ recevoir des données d'identification du contenant (2) de stockage dudit liquide (3) de stock, transmises par le lecteur (35) d'identifiant (34),
∘ consulter une base de données comprenant les valeurs de l'intervalle prédéterminé de valeurs de conductivité électrique dudit liquide (3) de stock à la température mesurée,
∘ comparer les données transmises par le dispositif de mesure de conductivité électrique et les valeurs de l'intervalle prédéterminé de valeurs de conductivité électrique dudit liquide de stock à la température mesurée, correspondant aux données transmises par le lecteur d'identifiant, les valeurs de l'intervalle prédéterminé de valeurs de conductivité électrique étant stockées dans une base de données, et
ο activer le dispositif de pompage (40) lorsque la valeur de conductivité électrique mesurée appartient à l'intervalle prédéterminé de valeurs de conductivité électrique dudit liquide de stock à la température mesurée.
